# EUROPEAN PATENT APPLICATION

(11) **EP 4 518 395 A1**
(43) Date of publication of application: **05.03.2025**
(21) Application number: 22940257.3
(22) Date of filing: 28.04.2022
(51) Int. Cl.: H04W 16/28, H04W 28/04, H04W 88/02

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2022/019390
(87) International publication number: WO 2023/209984

(57) **Abstract**

A terminal according to one aspect of the present disclosure includes: a receiving section that receives first downlink control information (DCI) for scheduling a signal corresponding to a transmission occasion of a Hybrid Automatic Repeat reQuest ACKnowledgement (HARQ-ACK) and second DCI for beam indication corresponding to the transmission occasion; and a control section that determines a first transmission configuration indication (TCI) state to apply to the signal, based on a first TCI field included in the first DCI, and determines a second TCI state application of which is to be initiated after elapse of a specific period from a last symbol of the transmission occasion, based on a second TCI field included in the second DCI. Each of the first TCI state and the second TCI state is a TCI state to be applied to both a downlink (DL) signal and an uplink (UL) signal, or a TCI state to be applied to a DL signal and a TCI state to be applied to a UL signal. According to one aspect of the present disclosure, it is possible to appropriately perform TCI state indication.

## Description

### Technical Field

The present disclosure relates to a terminal, a radio communication method, and a base station in next-generation mobile communication systems.

### Background Art

In a Universal Mobile Telecommunications System (UMTS) network, the specifications of Long Term Evolution (LTE) have been drafted for the purpose of further increasing high speed data rates, providing lower latency and so on (see Non-Patent Literature 1). In addition, for the purpose of further high capacity, advancement and the like of LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), it is studied that a user terminal (terminal, User Equipment (UE)) controls transmission/reception processing, based on information related to quasi-co-location (QCL) (QCL assumption/Transmission Configuration Indication (TCI) state/spatial relation).

It is studied to apply a configured/activated/indicated TCI state to a plurality of types of signals (channels/RSs). However, a method of indicating/applying a TCI state is not clear in some cases. Unless a method of indicating a TCI state is clear, this may cause degradation in communication quality, throughput reduction, and the like.

Thus, an object of the present disclosure is to provide a terminal, a radio communication method, and a base station that are for appropriately performing TCI state indication.

### Solution to Problem

A terminal according to one aspect of the present disclosure includes: a receiving section that receives first downlink control information (DCI) for scheduling a signal corresponding to a transmission occasion of a Hybrid Automatic Repeat reQuest ACKnowledgement (HARQ-ACK) and second DCI for beam indication corresponding to the transmission occasion; and a control section that determines a first transmission configuration indication (TCI) state to apply to the signal, based on a first TCI field included in the first DCI, and determines a second TCI state application of which is to be initiated after elapse of a specific period from a last symbol of the transmission occasion, based on a second TCI field included in the second DCI. Each of the first TCI state and the second TCI state is a TCI state to be applied to both a downlink (DL) signal and an uplink (UL) signal, or a TCI state to be applied to a DL signal and a TCI state to be applied to a UL signal.

### Advantageous Effects of Invention

According to one aspect of the present disclosure, it is possible to appropriately perform TCI state indication.

### Brief Description of Drawings

[FIG. 1] FIG. 1A and FIG. 1B are diagrams to show examples of communication between a moving object and transmission points (for example, RRHs).
[FIG. 2] FIG. 2A to FIG. 2C are diagrams to show examples of schemes 0 to 2 related to an SFN.
[FIG. 3] FIG. 3A and FIG. 3B are diagrams to show an example of scheme 1.
[FIG. 4] FIG. 4A to FIG. 4C are diagrams to show an example of a Doppler pre-compensation scheme.
[FIG. 5] FIG. 5 is a diagram to show an example of simultaneous beam update over a plurality of CCs.
[FIG. 6] FIG. 6A and FIG. 6B are diagrams to show examples of a common beam.
[FIG. 7] FIG. 7 is a diagram to show an example of a BAT defined in Rel. 17.
[FIG. 8] FIG. 8 is a diagram to show an example of application of TCI states when a plurality of pieces of beam indication DCI (a plurality of beam indication DCI) are received.
[FIG. 9] FIG. 9A and FIG. 9B are diagrams to show respective examples of single-DCI based multi-TRP transmission and multi-DCI based multi-TRP transmission.
[FIG. 10] FIG. 10A and FIG. 10B are diagrams to show examples of a TCI field(s) in DCI.
[FIG. 11] FIG. 11A and FIG. 11B are diagrams to show an example of configuration/indication of joint TCI states in single-DCI based multi-TRP.
[FIG. 12] FIG. 12A and FIG. 12B are diagrams to show an example of configuration/indication of separate TCI states in single-DCI based multi-TRP.
[FIG. 13] FIG. 13A and FIG. 13B are diagrams to show an example of configuration/indication of a joint TCI state corresponding to a CORESET pool index of a first value in multi-DCI based multi-TRP.
[FIG. 14] FIG. 14A and FIG. 14B are diagrams to show an example of configuration/indication of a joint TCI state corresponding to a CORESET pool index of a second value in multi-DCI based multi-TRP.
[FIG. 15] FIG. 15A to FIG. 15D are diagrams to show an example of TCI state indication according to option 1-A/1-B.
[FIG. 16] FIG. 16 is a diagram to show an example of application of TCI states according to a first embodiment.
[FIG. 17] FIG. 17 is a diagram to show an example of indication of TCI states according to a variation of the first embodiment.
[FIG. 18] FIG. 18 is a diagram to show another example of the indication of TCI states according to the variation of the first embodiment.
[FIG. 19] FIG. 19 is a diagram to show another example of the indication of TCI states according to the variation of the first embodiment.
[FIG. 20] FIG. 20 is a diagram to show an example of fields of DCI according to a second embodiment.
[FIG. 21] FIG. 21A to FIG. 21D are diagrams to show an example of switching between a single TRP and multi-TRP according to the second embodiment.
[FIG. 22] FIG. 22 is a diagram to show an example of dynamic switching of DCI sizes according to the second embodiment.
[FIG. 23] FIG. 23 is a diagram to show an example of switching of single/multi-TRP modes according to the second embodiment.
[FIG. 24] FIG. 24 is a diagram to show another example of the switching of the single/multi-TRP modes according to the second embodiment.
[FIG. 25] FIG. 25 is a diagram to show another example of the switching of the single/multi-TRP modes according to the second embodiment.
[FIG. 26] FIG. 26 is a diagram to show another example of the switching of the single/multi-TRP mode according to option 2-2.
[FIG. 27] FIG. 27 is a diagram to show an example of a schematic structure of a radio communication system according to one embodiment.
[FIG. 28] FIG. 28 is a diagram to show an example of a structure of a base station according to one embodiment.
[FIG. 29] FIG. 29 is a diagram to show an example of a structure of a user terminal according to one embodiment.
[FIG. 30] FIG. 30 is a diagram to show an example of a hardware structure of the base station and the user terminal according to one embodiment.
[FIG. 31] FIG. 31 is a diagram to show an example of a vehicle according to one embodiment.

### Description of Embodiments

### (TCI, Spatial Relation, and QCL)

For NR, control of reception processing (for example, at least one of reception, de-mapping, demodulation, and decoding) and transmission processing (for example, at least one of transmission, mapping, precoding, modulation, and coding) of at least one of a signal and a channel (expressed as a signal/channel) in a UE, based on a transmission configuration indication state (TCI state) has been under study.

The TCI state may be a state applied to a downlink signal/channel. A state that corresponds to a TCI state applied to an uplink signal/channel may be expressed as spatial relation.

The TCI state is information related to quasi-co-location (QCL) of the signal/channel, and may be referred to as a spatial reception parameter, spatial relation information (SRI), or the like. The TCI state may be configured for the UE for each channel or for each signal.

QCL is an indicator indicating statistical properties of the signal/channel. For example, when a certain signal/channel and another signal/channel are in a relationship of QCL, it may mean that it is assumable that at least one of a Doppler shift, a Doppler spread, an average delay, a delay spread, and a spatial parameter (for example, a spatial reception parameter (spatial Rx parameter)) is the same (the relationship of QCL is satisfied in at least one of these) between the plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): spatial reception parameter

A case where the UE assumes that a given control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

For a PDCCH and a PDSCH, a QCL type A RS may always be configured, while a QCL type D RS may be configured additionally. Since it is difficult to estimate Doppler shift, latency, and the like, based on one-shot reception of a DMRS, the QCL type A RS is used for improvement of channel estimation accuracy. The QCL type D RS is used for receive beam determination at the time of DMRS reception.

For example, TRSs 1-1, 1-2, 1-3, and 1-4 are transmitted, and TRS 1-1 is notified as a QCL type C/D RS according to the TCI state of a PDSCH. By the TCI state being notified, the UE can use information obtained from results of past periodic reception/measurement of TRS 1-1, for reception/channel estimation of a DMRS for PDSCH. In this case, the QCL source of the PDSCH is TRS 1-1, and the QCL target is the DMRS for PDSCH.

### (Default TCI State/Default Spatial Relation/Default PL-RS)

In Rel. 16, a PDSCH may be scheduled by DCI having a TCI field. A TCI state for a PDSCH is indicated by a TCI field. A TCI field in DCI format 1-1 has three bits, and a TCI field in DCI format 1-2 has three bits at maximum.

In the RRC connected mode, if a TCI information element in first DCI (higher layer parameter tci-PresentInDCI) is set at "enabled" for a CORESET for scheduling a PDSCH, a UE assumes that a TCI field is present in DCI format 1_1 of a PDCCH transmitted in the CORESET.

If a TCI information element in second DCI (higher layer parameter tci-PresentInDCI-1-2) for a CORESET for scheduling a PDSCH is configured for a UE, the UE assumes that a TCI field having a DCI field size indicated by the TCI information element in the second DCI is present in DCI format 1_2 of the PDSCH to be transmitted in the CORESET.

In Rel. 16, a PDSCH may be scheduled by DCI having no TCI field. The DCI format of the DCI may be DCI format 1_0 or DCI format 1_1/1_2 in a case where a TCI information element in DCI (higher layer parameter tci-PresentInDCI or tci-PresentInDCI-1-2) is not configured (enabled). When a PDSCH is scheduled by DCI having no TCI field and if the time offset between reception of DL DCI (DCI for scheduling the PDSCH (scheduling DCI)) and the corresponding PDSCH (PDSCH scheduled by the DCI) is equal to or larger than a threshold (timeDurationForQCL), a UE assumes that the TCI state or the QCL assumption for the PDSCH is the same as the TCI state or the QCL assumption (default TCI state) of a CORESET (for example, scheduling DCI).

In the RRC connected mode, when the time offset between reception of DL DCI (DCI for scheduling a PDSCH) and the corresponding PDSCH (PDSCH scheduled by DCI) is smaller than the threshold (timeDurationForQCL) (application condition, first condition) in both a case where a TCI information element in DCI (higher layer parameter tci-PresentInDCI or tci-PresentInDCI-1-2) is set at "enabled" and a case where a TCI information element in DCI is not configured, the TCI state of the PDSCH (default TCI state) may be the TCI state having the lowest CORESET ID in the latest slot in an active DL BWP in the CC (of a specific UL signal) if it is a case of non-cross carrier scheduling. Otherwise, the TCI state of the PDSCH (default TCI state) may be the TCI state having the lowest TCI state ID of the PDSCH in the active DL BWP in the CC scheduled.

In Rel. 15, individual MAC CEs, specifically, a MAC CE for activation/deactivation of a PUCCH spatial relation and a MAC CE for activation/deactivation of an SRS spatial relation, are needed. A PUSCH spatial relation conforms to an SRS spatial relation.

In Rel. 16, at least one of a MAC CE for activation/deactivation of a PUCCH spatial relation and a MAC CE for activation/deactivation of an SRS spatial relation need not be used.

If neither a spatial relation nor a PL-RS for a PUCCH is configured in FR2 (application condition, second condition), default assumption of a spatial relation and default assumption of a PL-RS (default spatial relation and default PL-RS) are applied to the PUCCH. If neither a spatial relation nor a PL-RS for an SRS (SRS resource for an SRS or SRS resource corresponding to an SRI in DCI format 0_1 for scheduling a PUSCH) is configured in FR2 (application condition, second condition), default assumption of a spatial relation and default assumption of a PL-RS (default spatial relation and default PL-RS) are applied to the PUSCH scheduled by DCI format 0_1 and the SRS.

If a CORESET is configured in the active DL BWP on the CC (application condition), the default spatial relation and the default PL-RS may correspond to the TCI state or the QCL assumption of the CORESET having the lowest CORESET ID in the active DL BWP. If a CORESET is not configured in the active DL BWP on the CC, the default spatial relation and the default PL-RS may correspond to the active TCI state having the lowest ID of a PDSCH in the active DL BWP.

In Rel. 15, the spatial relation of a PUSCH scheduled by DCI format 0_0 conforms to the spatial relation of the PUCCH resource having the lowest PUCCH resource ID among the active spatial relations of the PUCCH on the same CC. A network need update PUCCH spatial relations on all the SCells even when no PUCCH is transmitted on any SCell.

In Rel. 16, no PUCCH configuration is needed for a PUSCH scheduled by DCI format 0_0. When there is no active PUCCH spatial relation or there is no PUCCH resource on an active UL BWP in the CC for a PUSCH scheduled by DCI format 0_0 (application condition, second condition), a default spatial relation and a default PL-RS are applied to the PUSCH.

The application condition for a default spatial relation/default PL-RS for SRS may include that an enable default beam pathloss for SRS information element (higher layer parameter enableDefaultBeamPlForSRS) is set at enabled. The application condition for a default spatial relation/default PL-RS for PUCCH may include that an enable default beam pathloss for PUCCH information element (higher layer parameter enableDefaultBeamPlForPUCCH) is set at enabled. The application condition for a default spatial relation/default PL-RS for PUSCH scheduled by DCI format 0_0 may include that an enable default beam pathloss for PUSCH scheduled by DCI format 0_0 information element (higher layer parameter enableDefaultBeamPlForPUSCH0_0) is set at enabled.

In Rel. 16, when an RRC parameter (parameter for enabling default beam PL for PUCCH (enableDefaultBeamPL-ForPUCCH), a parameter for enabling default beam PL for PUSCH (enableDefaultBeamPL-ForPUSCH0_0), or a parameter for enabling default beam PL for SRS (enableDefaultBeamPL-ForSRS)) is configured and no spatial relation or PL-RS is configured, for a UE, the UE applies a default spatial relation/PL-RS.

The threshold may be referred to as a time duration for QCL, "timeDurationForQCL," "Threshold," "Threshold for offset between a DCI indicating a TCI state and a PDSCH scheduled by the DCI," "Threshold-Sched-Offset," "beamSwitchTiming," a schedule offset threshold, a scheduling offset threshold, and the like. The threshold may be reported by a UE as a UE capability (per subcarrier spacing).

In a case where the offset (scheduling offset) between reception of DL DCI and a corresponding PDSCH is smaller than a threshold timeDurationForQCL, where at least one TCI state configured for a serving cell of the scheduled PDSCH includes "QCL type D," where a UE is configured with an enable two-default TCI information element (enableTwoDefaultTCIStates-r16), and where at least one TCI codepoint (codepoint of a TCI field in the DL DCI) indicates two TCI states, the UE assumes that a DMRS port of the PDSCH or PDSCH transmission occasion in the serving cell is QCLed (quasi co-located) with an RS related to a QCL parameter associated with two TCI states corresponding to the lowest codepoint of TCI codepoints including two different TCI states (two-default QCL assumption determination rule). The enable two-default TCI information element indicates that an Rel-16 operation for two default TCI states for PDSCH when at least one TCI codepoint is mapped to two TCI states is enabled.

As a default TCI state of a PDSCH in Rel. 15/16, specifications of a default TCI state for single TRP, a default TCI state for multi-DCI based multi-TRP, and a default TCI state for single-DCI based multi-TRP have been drafted.

As a default TCI state for of an aperiodic CSI-RS (A-CSI-RS) in Rel. 15/16, specifications of a default TCI state for single TRP, a default TCI state for multi-DCI based multi-TRP, and a default TCI state for single-DCI based multi-TRP have been drafted.

In Rel. 15/16, specifications of a default spatial relation and a default PL-RS for each of a PUSCH/PUCCH/SRS have been drafted.

### (Multi-TRP)

For NR, it is studied that one or a plurality of transmission/reception points (TRPs) (multi-TRP (multi TRP (MTRP))) perform DL transmission to a UE by using one or a plurality of panels (multi-panel). It is also studied that the UE performs UL transmission to the one or plurality of TRPs by using one or a plurality of panels.

Note that the plurality of TRPs may correspond to the same cell identifier (ID) or may correspond to different cell IDs. The cell ID may be a physical cell ID or a virtual cell ID.

The multi-TRP (for example, TRPs #1 and #2) may be connected via ideal/non-ideal backhaul to exchange information, data, and the like. Each TRP of the multi-TRP may transmit a different codeword (Code Word (CW)) and a different layer. As one mode of multi-TRP transmission, non-coherent joint transmission (NCJT) may be employed.

In NCJT, for example, TRP #1 performs modulation mapping on a first codeword, performs layer mapping, and transmits a first PDSCH in layers of a first number (for example, two layers) by using first precoding. TRP #2 performs modulation mapping on a second codeword, performs layer mapping, and transmits a second PDSCH in layers of a second number (for example, two layers) by using second precoding.

Note that a plurality of PDSCHs (multi-PDSCH) transmitted by NCJT may be defined to partially or entirely overlap in terms of at least one of the time and frequency domains. In other words, the first PDSCH from a first TRP and the second PDSCH from a second TRP may overlap in terms of at least one of the time and frequency resources.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a certain QCL type (for example, QCL type D).

A plurality of PDSCHs (which may be referred to as multi-PDSCH (multiple PDSCHs)) from the multi-TRP may be scheduled by using one piece of DCI (single DCI, single PDCCH) (single master mode, single-DCI based multi-TRP). The plurality of PDSCHs from the multi-TRP may be separately scheduled by using a plurality of pieces of DCI (a plurality of DCI, multi-DCI, multi-PDCCH (multiple PDCCHs)) (multi-master mode, multi-DCI based multi-TRP).

For URLLC for multi-TRP, it is studied to support PDSCH (transport block (TB) or codeword (CW)) repetition over multi-TRP. It is studied to support a scheme of repetition over multi-TRP in the frequency domain, the layer (space) domain, or the time domain (URLLC schemes, for example, schemes 1, 2a, 2b, 3, and 4). In scheme 1, multi-PDSCH from multi-TRP are space division multiplexed (SDMed). In schemes 2a and 2b, PDSCHs from multi-TRP are frequency division multiplexed (FDMed). In scheme 2a, a redundancy version (RV) is the same for the multi-TRP. In scheme 2b, an RV may be the same or may be different for the multi-TRP. In schemes 3 and 4, multi-PDSCH from multi-TRP are time division multiplexed (TDMed). In scheme 3, multi-PDSCH from multi-TRP are transmitted in one slot. In scheme 4, multi-PDSCH from multi-TRP are transmitted in different slots.

According to such a multi-TRP scenario, more flexible transmission control using a channel with high quality is possible.

To support intra-cell (with the same cell ID) and inter-cell (with different cell IDs) multi-TRP transmission based on a plurality of PDCCHs, one control resource set (CORESET) in PDCCH configuration information (PDCCH-Config) may correspond to one TRP in RRC configuration information for linking a plurality of pairs of a PDCCH and a PDSCH with a plurality of TRPs.

When at least one of conditions 1 and 2 below is satisfied, the UE may determine that it is multi-DCI based multi-TRP. In this case, a TRP may be interpreted as a CORESET pool index.

### {Condition 1}

One CORESET pool index is configured.

### {Condition 2}

Two different values (for example 0 and 1) of a CORESET pool index are configured.

When the following condition is satisfied, the UE may determine that it is single-DCI based multi-TRP. In this case, two TRPs may be interpreted as two TCI states indicated by a MAC

### CE/DCI.

### {Condition}

To indicate one or two TCI states for one codepoint of a TCI field in DCI, an "enhanced TCI states activation/deactivation for UE-specific PDSCH MAC CE" is used.

DCI for common beam indication may be a UE-specific DCI format (for example, DL DCI format (for example, 1_1, 1_2)), may be a UL DCI format (for example, 0_1, 0_2), or may be a UE-group common DCI format.

### (Multi-TRP PDCCH)

For reliability of a multi-TRP PDCCH based on non-single frequency network (SFN), studies 1 to 3 below are studied.
{Study 1} Coding/rate matching is based on one repetition, and the same coding bits are repeated in other repetitions.
{Study 2} Each repetition has the same number of control channel elements (CCEs) and the same coding bits and corresponds to the same DCI payload.
{Study 3} Two or more PDCCH candidates are explicitly linked to each other. A UE finds the link before decoding.

Choices 1-2, 1-3, 2, and 3 below are studied for PDCCH repetition.

### {Choice 1-2}

Two sets of PDCCH candidates (in a given search space (SS) set) are associated with two respective TCI states of a CORESET. Here, the same CORESET, the same SS set, and PDCCH repetitions in different monitoring occasions are used.

### {Choice 1-3}

Two sets of PDCCH candidates are associated with two respective SS sets. Both of the SS sets are associated with a CORESET, and each SS set is associated with only one TCI state of the CORESET. Here, the same CORESET and two SS sets are used.

### {Choice 2}

One SS set is associated with two different CORESETs.

### {Choice 3}

Two SS sets are associated with two respective CORESETs.

As described above, it is studied that two PDCCH candidates in two SS sets for PDCCH repetitions are supported and two SS sets are explicitly linked.

### (SFN PDCCH)

For a PDCCH/CORESET defined in Rel. 15, one TCI state without any CORESET pool index (CORESETPoolIndex) (which may be referred to as TRP information (TRP Info)) is configured for one CORESET.

For enhancement of a PDCCH/CORESET defined in Rel. 16, a CORESET pool index is configured for each CORESET in multi-DCI based multi-TRP.

In Rel. 17 or later versions, enhancements 1 and 2 below related to a PDCCH/CORESET are studied.

In a case where a plurality of antennas (small antennas, transmission/reception points) having the same cell ID form a single frequency network (SFN), up to two TCI states can be configured/activated for one CORESET by higher layer signaling (RRC signaling/MAC CE) (enhancement 1). The SFN contributes to improvement of at least one of management and reliability of an HST (high speed train).

In PDCCH repetition transmission (which may be simply referred to as "repetition"), two PDCCH candidates in two search space sets are linked, and each search space set is associated with a corresponding CORESET (enhancement 2). The two search space sets may be associated with the same or different CORESETs. For one CORESET, one TCI state (one at maximum) may be configured/activated by higher layer signaling (RRC signaling/MAC

### CE).

If two search space sets are associated with different CORESETs having different TCI states, this may mean multi-TRP repetition transmission. If two search space sets are associated with the same CORESET (CORESETs having the same TCI state), this may mean single-TRP repetition transmission.

### (HST)

In LTE, arrangement in a tunnel for an HST (high speed train) is difficult. A large antenna performs transmission to the outside/inside of a tunnel. For example, such a large antenna has transmission power of approximately 1 to 5 W. For handover, it is important to perform transmission to the outside of a tunnel before a UE enters the tunnel. For example, a small antenna has transmission power of approximately 250 mW. A plurality of small antennas (transmission/reception points) having the same cell ID and having a distance of 300 m form a single frequency network (SFN). All the small antennas in such an SFN transmit identical signals on the same PRB at the same time. It is assumed that a terminal performs transmission to/reception from one base station. In actual, a plurality of transmission/reception points transmit identical DL signals. At high-speed movement, transmission/reception points in several km units form one cell. Handover is performed at the time of moving over cells. In this way, it is possible to reduce handover frequency.

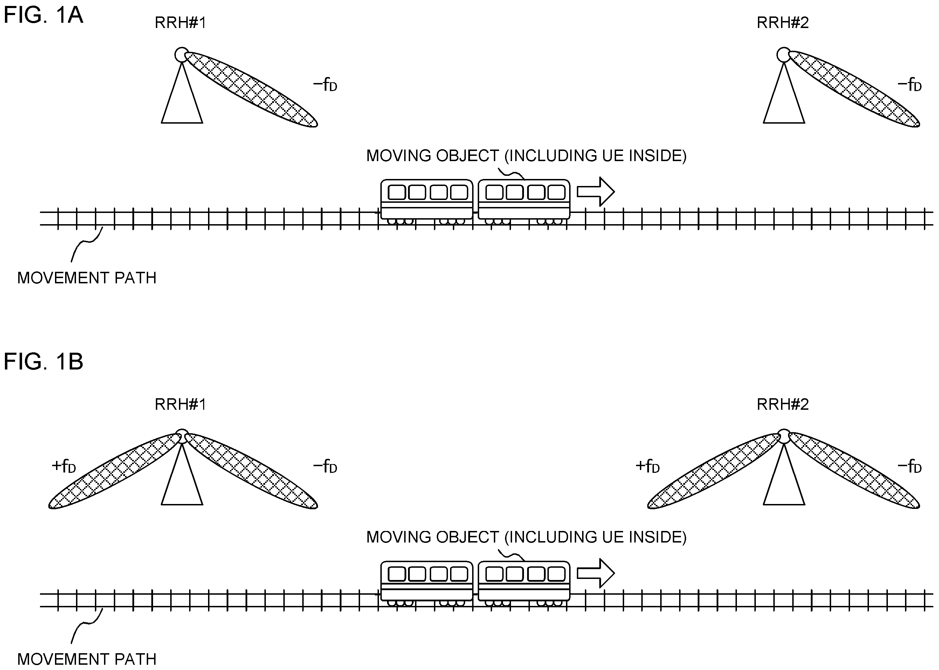

In NR, it is assumed that, to perform communication with a terminal (also referred to as a UE below) included in a moving object such as a train moving at high speed (HST (high speed train)), beams transmitted from transmission points (for example, RRHs) are used. An existing system (for example, Rel. 15) supports to transmit a uni-directional beam from each RRH to perform communication with a moving object (see FIG. 1A).

FIG. 1A shows a case where RRHs are installed along a movement path (or a movement direction, travel direction, traveling path) of the moving object and a beam is formed in the travel direction of the moving object from each RRH. The RRH forming a unidirectional beam may be referred to as a uni-directional RRH. In the example shown in FIG. 1A, the moving object receives a minus Doppler shift (-fD) from each RRH.

Note that, although a case where each beam is formed in the travel direction of the moving object is shown here, this is not restrictive. Each beam may be formed in the opposite direction to the travel direction or may be formed in any direction irrespective of the travel direction of the moving object.

In Rel. 16 or later versions, it is also assumed that a plurality of (for example, two or more) beams are transmitted from each RRH. For example, it is assumed that beams are formed in both a travel direction of a moving object and the opposite direction to the travel direction (see FIG. 1B).

FIG. 1B shows a case where RRHs are installed along a movement path of the moving object and beams are formed in both the travel direction of the moving object and the opposite direction to the travel direction from each RRH. The RRH forming multi-directional (for example, bi-directional) beams may be referred to as a bi-directional RRH.

In this HST, a UE performs communication similarly to a single TRP. In base station implementation, transmission can be performed from a plurality of TRPs (same cell ID).

In the example in FIG. 1B, when two RRHs (here, RRH #1 and RRH #2) use an SFN, signals are switched from a signal that has received a minus Doppler shift to a signal that has received a plus Doppler shift increasing a power, when the moving object is midway between the two RRHs. In this case, the maximum change width of Doppler shift requiring correction is a change from -fD to +fD, which is twice as much as that of a case with uni-directional RRHs.

Note that, in the present disclosure, a plus Doppler shift may be interpreted as information related to a plus Doppler shift, a plus (positive)-direction Doppler shift, and plus (positive)-direction Doppler information. A minus Doppler shift may be interpreted as information related to a minus Doppler shift, a minus (negative)-direction Doppler shift, and minus (negative)-direction Doppler information.

Here, as a scheme for HST, scheme 0 to scheme 2 below (HST scheme 0 to HST scheme 2) are compared.

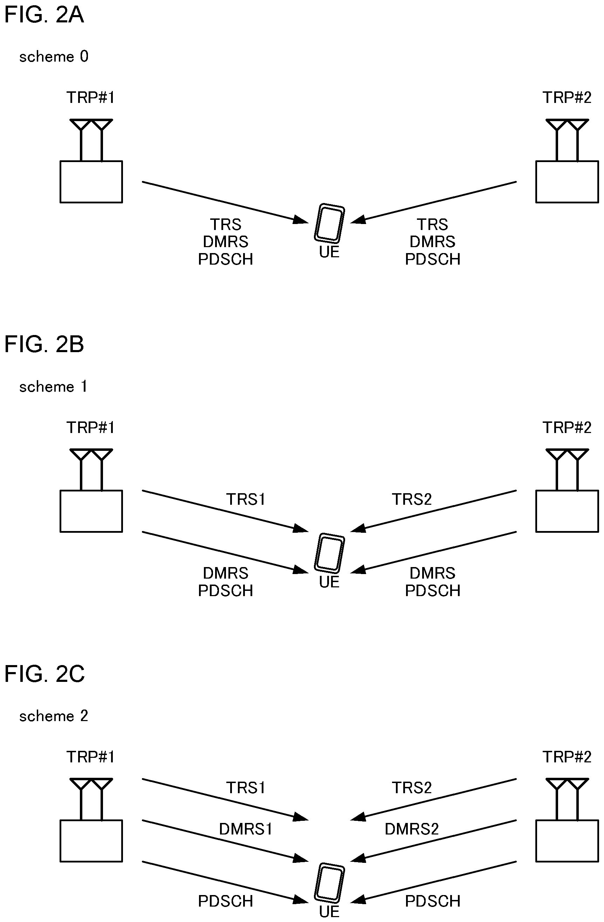

In scheme 0 in FIG. 2A, a tracking reference signal (TRS), a DMRS, and a PDSCH are transmitted commonly from two TRPs (RRHs) (by using the same time and the same frequency resources) (normal SFN, transparent SFN, HST-SFN).

In scheme 0, since a UE receives DL channels/signals on the equivalent of a single TRP, the number of TCI states of the PDSCHs is one.

Note that, in Rel. 16, an RRC parameter for differentiating transmission using a single TRP and transmission using an SFN is defined. When a UE reports corresponding UE capability information, the UE may differentiate reception of a DL channel/signal from a single TRP and reception of PDSCHs assuming an SFN, based on the RRC parameter. Meanwhile, the UE may perform transmission/reception using an SFN on the assumption of a single TRP.

In scheme 1 in FIG. 2B, each TRS is transmitted in a TRP-specific manner (by using a different time/frequency resource from each TRP). In this example, TRS1 is transmitted from TRP #1, and TRS2 is transmitted from TRP #2.

In scheme 1, since a UE receives a DL channel/signal from each TRP by using a TRS from the TRP, the number of TCI states of the PDSCHs is two.

In scheme 2 in FIG. 2C, each TRS and each DMRS are transmitted in a TRP-specific manner. In this example, TRS1 and DMRS1 are transmitted from TRP #1, and TRS2 and DMRS2 are transmitted from TRP #2. Schemes 1 and 2 can suppress an abrupt change in Doppler shift and estimate/compensate a Doppler shift appropriately, compared to scheme 0. Since scheme 2 uses a larger number of DMRSs than the number of DMRSs in scheme 1, the maximum throughput in scheme 2 is lower than that in scheme 1.

In scheme 0, the UE switches a single TRP and an SFN, based on higher layer signaling (RRC information element/MAC CE).

The UE may switch scheme 1/scheme 2/NW pre-compensation scheme, based on higher layer signaling (RRC information element/MAC CE).

In scheme 1, two respective TRS resources are configured for the travel direction of the HST and the opposite direction to the travel direction.

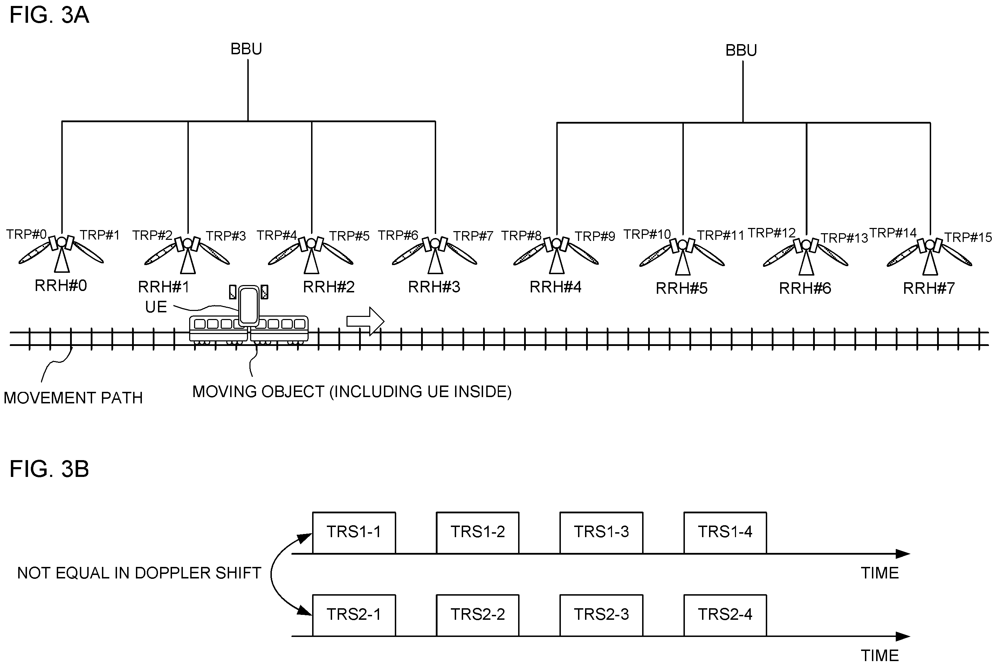

In the example in FIG. 3A, TRPs that transmit DL signals in the opposite direction of the HST (TRPs #0, #2, ...) transmit first TRSs (TRSs arriving from the front of the HST) in the same time and frequency resources (SFN). TRPs that transmit DL signals in the travel direction of the HST (TRPs #1, #3, ...) transmit second TRSs (TRSs arriving from the rear of the HST) in the same time and frequency resources (SFN). The first TRSs and the second TRSs may be transmitted/received by using different frequency resources.

In the example in FIG. 3B, TRSs 1-1 to 1-4 are transmitted as the first TRSs, and TRSs 2-1 to 2-4 are transmitted as the second TRSs.

In consideration of beam management, the first TRSs are transmitted by using 64 beams and 64 time resources, and the second TRSs are transmitted by using 64 beams and 64 time resources. The beams of the first TRSs and the beams of the second TRSs are considered to be equal (equal in QCL type D RS). By multiplexing the first TRSs and the second TRSs in the same time resources and different frequency resources, resource usage efficiency can be increased.

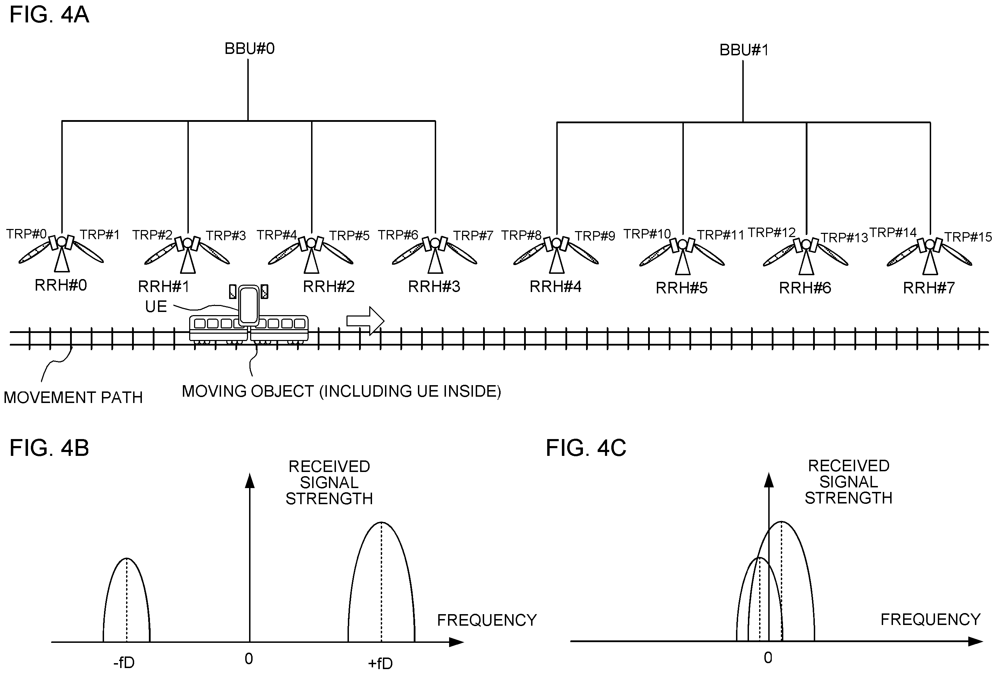

In the example in FIG. 4A, RRHs #0 to #7 are installed along a movement path of an HST. RRHs #0 to #3 are connected to baseband unit (BBU) #0, and RRHs #4 to #7 are connected to BBU #1. Each RRH is a bi-directional RRH and forms beams in both the travel direction of the movement path and the opposite direction to the travel direction by using respective transmission/reception points (TRPs).

In a reception signal in the example in FIG. 4B (single TRP (SFN)/scheme 1), when a UE receives a signal/channel (beam in a travel direction of an HST, beam from the rear of a UE) transmitted from TRP #(2n - 1) (n is an integer equal to or larger than 0), a minus Doppler shift (-fD in this example) occurs. When the UE receives a signal/channel (beam in the opposite direction to the travel direction of the HST, beam from the front of the UE) transmitted from TRP #2n (n is an integer equal to or larger than 0), a plus Doppler shift (+fD in this example) occurs.

For Rel. 17 or later versions, it is studied that a base station performs Doppler pre-(preliminary) compensation (correction) scheme (Pre-Doppler Compensation scheme, network (NW) pre-compensation scheme (HST NW pre-compensation scheme), TRP pre-compensation scheme, TRP-based pre-compensation scheme) in transmission of a downlink (DL) signal/channel to a UE in an HST from a TRP. By the TRP performing Doppler compensation in advance at the time of performing transmission of a DL signal/channel to the UE, this can reduce the influence of a Doppler shift at the time of reception of the DL signal/channel in the UE. In the present disclosure, a Doppler pre-compensation scheme may be a combination of scheme 1 and Doppler shift pre-compensation by a base station.

It is studied that, in the Doppler pre-compensation scheme, a TRS from each TRP is transmitted without Doppler pre-compensation being performed, and a PDSCH from each TRP is transmitted with Doppler pre-compensation being performed.

In the Doppler pre-compensation scheme, each TRP that forms a beam in the travel direction of a movement path and each TRP that forms a beam in the opposite direction to the travel direction of the movement path each perform Doppler correction and then transmit a DL signal/channel to the UE in the HST. In this example, TRP #(2n - 1) performs plus Doppler correction, and TRP #2n performs minus Doppler correction, to thereby reduce an influence of Doppler shift at the time of reception of signals/channels in the UE (FIG. 4C).

Note that, in the situation in FIG. 4C, since the UE receives a DL channel/signal from each TRP by using a TRS from the TRP, the number of TCI states of the PDSCHs may be two.

Further, for Rel. 17 or later versions, it is studied to use a TCI field (TCI state field) to dynamically switch a single TRP and an SFN. For example, by using an RRC information element/MAC CE (for example, Enhanced TCI States Activation/Deactivation for UE-specific PDSCH MAC CE)/DCI (TCI field), one or two TCI states are configured/indicated at each TCI codepoint (codepoint in the TCI field, DCI codepoint). When the UE is configured/indicated with one TCI state, the UE may determine to receive a PDSCH from a single TRP. When the UE is configured/indicated with two TCI states, the UE may determine to receive PDSCHs of an SFN using multi-TRP.

### (Simultaneous Beam Update for Plurality of CCs)

In Rel. 16, one MAC CE can update beam indices (TCI states) of a plurality of CCs.

A UE can be configured with up to two applicable CC lists (for example, applicable-CC-list) by RRC. When two applicable CC lists are configured, the two respective applicable CC lists may correspond to intra-band CA in FR1 and intra-band CA in FR2.

A TCI state activation MAC CE of a PDCCH activates TCI states associated with the same CORESET ID on all the BWPs/CCs in a corresponding applicable CC list.

A TCI state activation MAC CE of a PDSCH activates TCI states on all the BWPs/CCs in a corresponding applicable CC list

A spatial relation activation MAC CE of an A-SRS/SP-SRS activates spatial relations associated with the same SRS resource ID on all the BWPs/CCs in a corresponding applicable CC list

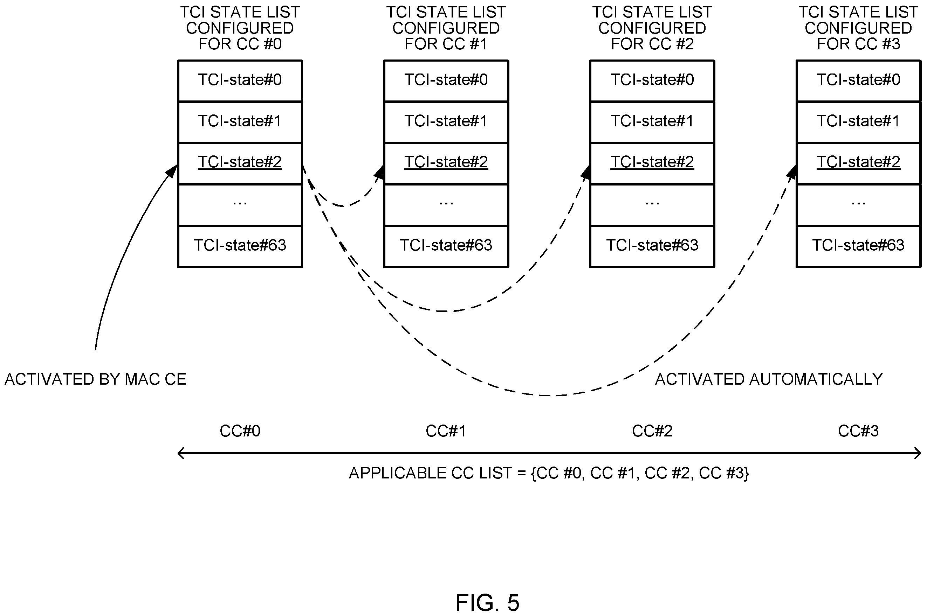

In the example in FIG. 5, a UE is configured with an applicable CC list indicating CCs #0, #1, #2, and #3 and a list indicating 64 TCI states for a CORESET or a PDSCH of each CC. When one TCI state of CC #0 is activated by a MAC CE, corresponding TCI states are activated in CCs #1, #2, and #3.

It is studied that such simultaneous beam update is applicable only to a case of a single TRP.

For a PDSCH, a UE may be based on procedure A below.

### {Procedure A}

The UE receives an activation command to map up to eight TCI states to codepoints of a DCI field (TCI field) in one CC/DL BWP or in one set of CCs/BWPs. When one set of TCI state IDs is activated for the one set of CCs/DL BWPs, an applicable CC list is then determined according to CCs indicated in the activation command, and the same set of TCI states is applied to all the DL BWPs in the indicated CCs. Only if the UE is not provided with a plurality of different values of CORESET pool indices (CORESETPoolIndex) in a CORESET information element (ControlResourceSet) and is not provided with at least one TCI codepoint mapped to two TCI states, one set of TCI state IDs can be activated for one set of CCs/DL BWPs.

For a PDCCH, a UE may be based on procedure B below.

### {Procedure B}

If the UE is provided with up to two cell lists for simultaneous TCI state activation by a simultaneous TCI update list (at least one of simultaneousTCI-UpdateList-r16 and simultaneousTCI-UpdateListSecond-r16), by a simultaneous TCI cell list (simultaneousTCI-CellList), the UE applies antenna port quasi co-location (QCL) provided by TCI states activated the same and having activated TCI state ID values, to a CORESET having an index p in all the configured DL BWPs in all the configured cells in one list determined based on a serving cell index provided by a MAC CE command. Only if the UE is not provided with a plurality of different values of CORESET pool indices (CORESETPoolIndex) in a CORESET information element (ControlResourceSet) and is not provided with at least one TCI codepoint mapped to two TCI states, a simultaneous TCI cell list can be provided for simultaneous TCI state activation.

For a semi-persistent (SP)/aperiodic (AP)-SRS, a UE may be based on procedure C below.

### {Procedure C}

For one set of CCs/BWPs, when spatial relation information (spatialRelationInfo) for an SP or AP-SRS resource configured by an SRS resource information element (higher layer parameter SRS-Resource) is activated/updated by a MAC CE, a CC applicable list is then indicated by a simultaneous spatial update list (higher layer parameter simultaneousSpatial-UpdateList-r16 or simultaneousSpatial-UpdateListSecond-r16), and the spatial relation information is applied to SP or AP-SRS resources having the same SRS resource ID in all the BWPs in the indicated CCs. Only if the UE is not provided with a plurality of different values of CORESET pool indices (CORESETPoolIndex) in a CORESET information element (ControlResourceSet) and is not provided with at least one TCI codepoint mapped to two TCI states, spatial relation information (spatialRelationInfo) for an SP or AP-SRS resource configured by an SRS resource information element (higher layer parameter SRS-Resource) is activated/updated for one set of CCs/BWPs by a MAC CE.

A simultaneous TCI cell list (simultaneousTCI-CellList) and a simultaneous TCI update list(s) (at least one of simultaneousTCI-UpdateList1-r16 and simultaneousTCI-UpdateList2-r16) are each a list of serving cells for which TCI relations can be updated simultaneously by a MAC CE. simultaneousTCI-UpdateList1-r16 and simultaneousTCI-UpdateList2-r16 do not include the same serving cells.

A simultaneous spatial update list(s) (at least one of higher layer parameters simultaneousSpatial-UpdatedList1-r16 and simultaneousSpatial-UpdatedList2-r16) is a list of serving cells for which spatial relations can be updated simultaneously by a MAC CE. simultaneousSpatial-UpdatedList1-r16 and simultaneousSpatial-UpdatedList2-r16 do not include the same serving cells.

Here, a simultaneous TCI update list and a simultaneous spatial update list are each configured by RRC, a CORESET pool index of each CORESET is configured by RRC, and a TCI codepoint mapped to each TCI state is indicated by a MAC CE.

### (Unified/common TCI Framework)

With a unified TCI framework, UL and DL channels can be controlled by a common framework. A unified TCI framework may indicate a common beam (common TCI state) and apply the common beam to all the UL and DL channels instead of defining a TCI state or a spatial relation for each channel as in Rel. 15, or apply a common beam for UL to all the UL channels while applying a common beam for DL to all the DL channels.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume respective different TCI states (separate TCI states, separate TCI pools, UL separate TCI pool and DL separate TCI pool, separate common TCI pools, UL common TCI pool and DL common TCI pool) for UL and DL.

By beam management based on a MAC CE (MAC CE level beam indication), default UL and DL beams may be aligned. A default TCI state of a PDSCH may be updated to match to a default UL beam (spatial relation).

By beam management based on DCI (DCI level beam indication), a common beam/unified TCI state may be indicated from the same TCI pool (joint common TCI pool, joint TCI pool, set) for both UL and DL. X (>1) TCI states may be activated by a MAC CE. UL/DL DCI may select one from the X active TCI states. The selected TCI state may be applied to channels/RSs of both UL and DL.

The TCI pool (set) may be a plurality of TCI states configured by an RRC parameter or a plurality of TCI states (active TCI states, active TCI pool, set) activated by a MAC CE among the plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥ 1) of TCI states (UL TCI states) to be applied to a UL channel/RS and the number M (≥ 1) of TCI states (DL TCI states) to be applied to a DL channel/RS may be defined. At least one of N and M may be notified/configured/indicated to a UE by higher layer signaling or physical layer signaling.

In the present disclosure, when it is described as N = M = X (where X is any integer), this may mean that X TCI states (corresponding to X TRPs) common to UL and DL (joint TCI states) are notified/configured/indicated to a UE.

When it is described as N = X (where X is any integer) and M = Y (where Y is any integer, Y may be equal to X (Y = X)), this may mean that X UL TCI states (corresponding to X TRP(s)) and Y DL TCI states (corresponding to Y TRP(s)) are notified/configured/indicated to a UE. The UL TCI states and the DL TCI state(s) may each mean a TCI state common to UL and DL (in other words, a joint TCI state) or may each mean a TCI state separately for either UL or DL (in other words, a separate TCI state).

For example, when it is described as N = M = 1, this may mean that one TCI state common to DL and UL for a single TRP is notified/configured/indicated to a UE (joint TCI state for a single TRP).

For example, when it is described as N = 1 and M = 1, this may mean that one UL TCI state and one DL TCI state for a single TRP are separately notified/configured/indicated to a UE (separate TCI states for a single TRP).

For example, when it is described as N = M = 2, this may mean that a plurality of (two) TCI states common to UL and DL for a plurality of (two) TRPs are notified/configured/indicated to a UE (joint TCI states for a plurality of TRPs).

For example, when it is described as N = 2 and M = 2, this may mean that a plurality of (two) UL TCI states and a plurality of (two) DL TCI states for a plurality of (two) TRPs are notified/configured/indicated to a UE (separate TCI states for a plurality of TRPs).

For example, when it is described as N = 2 and M = 1, this may mean that two TCI states common to UL and DL are notified/configured/indicated to a UE. In this case, the UE may use the two configured/indicated TCI states as UL TCI states while using one TCI state of the two configured/indicated TCI states as a DL TCI state.

For example, when it is described as N = 2 and M = 1, this may mean that two UL TCI states and one DL TCI state are notified/configured/indicated as separate TCI states to a UE.

Note that, in the above examples, cases where the values of N and M are each one or two have been described, but the values of N and M may each be three or more, and N and M may be different from each other.

A case of M > 1/N > 1 may indicate at least one of a TCI state indication for a plurality of TRPs and a plurality of TCI state indications for inter-band (inter band) CA.

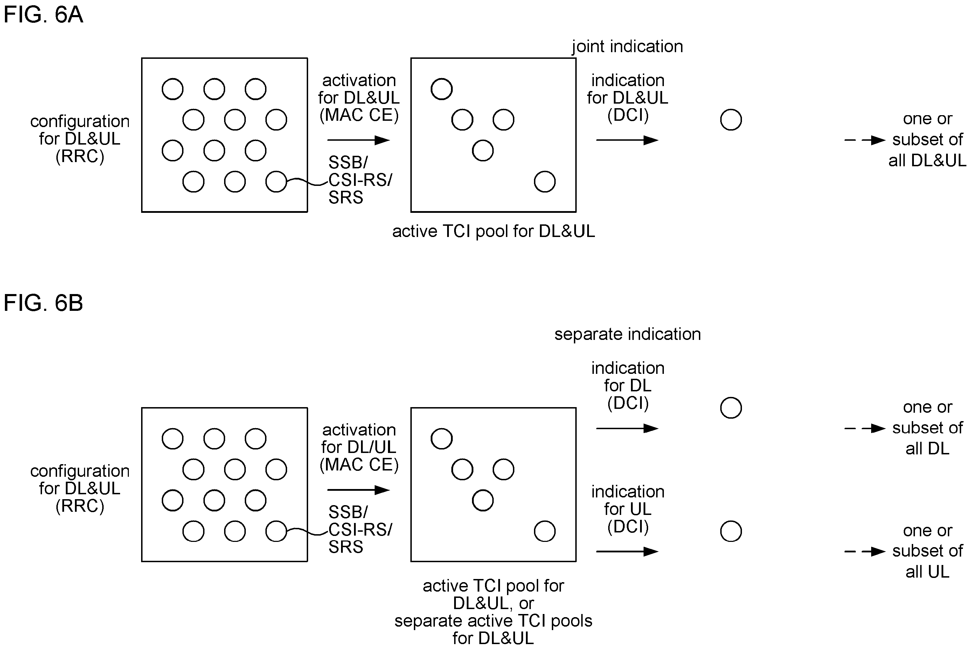

In the example in FIG. 6A, an RRC parameter (information element) configures a plurality of TCI states for both DL and UL. The MAC CE may activate a plurality of TCI states among the plurality of configured TCI states. DCI may indicate one of the plurality of activated TCI states. The DCI may be UL/DL DCI. The indicated TCI state may be applied to at least one (or all) of UL/DL channels/RSs. One piece of DCI may indicate both a UL TCI and a DL TCI.

In the example in FIG. 6A, one dot may represent one TCI state applied to both UL and DL or may represent two respective TCI states applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In the example in FIG. 6B, an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different pieces of DCI (different DCI) may indicate a UL TCI and a DL DCI separately.

Existing DCI format 1_1/1_2 may be used for indication of a common TCI state.

The DCI format indicating a TCI state may be a specific DCI format. For example, the specific DCI format may be DCI format 1_1/1_2 (defined in Rel. 15/16/17).

The DCI format indicating a TCI state (DCI format 1_1/1_2) may be a DCI format without DL assignment. In the present disclosure, a DCI format without DL assignment, a DCI format not scheduling a PDSCH (DCI format 1_1/1_2), a DCI format not including one or more specific fields (DCI format 1_1/1_2), a DCI format with one or more specific fields being set at a fixed value(s) (DCI format 1_1/1_2), and the like may be interchangeably interpreted.

For a DCI format without DL assignment (DCI format not including one or more specific fields), the specific field(s) may be a field(s) other than a TCI field, a DCI format identifier field, a carrier indicator field, a bandwidth (BWP) indicator field, a time domain resource assignment (TDRA) field, a Downlink Assignment Index (DAI) field (if configured), a transmission power control (TPC) command field (for a scheduled PUCCH), a PUCCH resource indicator field, and PDSCH-to-HARQ-ACK feedback timing indicator (PDSCH-to-HARQ feedback timing indicator) field (if present). The specific field(s) may be set as a reserved field(s) or may be ignored.

For a DCI format without DL assignment (DCI format with one or more specific fields being set at a fixed value(s)), the specific field(s) may be a redundancy version (RV) field, a modulation and coding scheme (MCS) field, a new data indicator field, and a frequency domain resource assignment (FDRA) field.

The RV field may be entirely set at 1. The MCS field may be entirely set at 1. The NDI field may be set at 0. A Type 0 FDRA field may be entirely set at 0. A Type 1 FDRA field may be entirely set at 1. An FDRA field for dynamic switch (higher layer parameter dynamicSwitch) may be entirely set at 0.

A common TCI framework may include separate TCI states for DL and UL.

### (beam application time (BAT))

Introduction of a time related to application of a beam (beam application time (BAT)) in a unified TCI state in Rel. 17 is studied.

In a unified TCI state in Rel. 17, DCI for scheduling a PDSCH (scheduling DCI) does not indicate any TCI state of the PDSCH.

The scheduling DCI indicates an "indicated TCI state(s)" of a DL/UL channel/RS subsequent to the DCI in terms of time.

In the present disclosure, an "indicated TCI state," a "Rel-17 TCI state," a "unified TCI state," a "common TCI state," a "joint (DL/UL) TCI state," a "separate (DL/UL) TCI state," and a "(simple) TCI state" may be interchangeably interpreted.

In Rel. 17, it is studied to apply (initiate application of) an indicated TCI state(s) in the next slot after the elapse of a specific time (BAT) from transmission of an HARQ-ACK corresponding to (related to) beam indication DCI (last symbol of a PUSCH/PUCCH in which the HARQ-ACK is transmitted).

Here, the beam indication DCI may be DCI that indicates a TCI state(s). The beam indication DCI may be a DCI format with DL assignment or a DCI format without DL assignment.

The HARQ-ACK corresponding to the beam indication DCI may mean an HARQ-ACK for the PDSCH scheduled by the beam indication DCI or may mean HARQ-ACK for the beam indication DCI.

The specific time (BAT) above may be provided by a specific parameter (for example, BeamAppTime_r17). The specific parameter may be configured for a UE by higher layer signaling (RRC signaling) or may be determined based on reported UE capability information.

The length of the BAT may be expressed in units of symbol. The length of the BAT may be any one of 1, 2, 4, 7, 14, 28, 42, 56, 70, 84, 98, 112, 224, and 336 (all in units of symbol), for example.

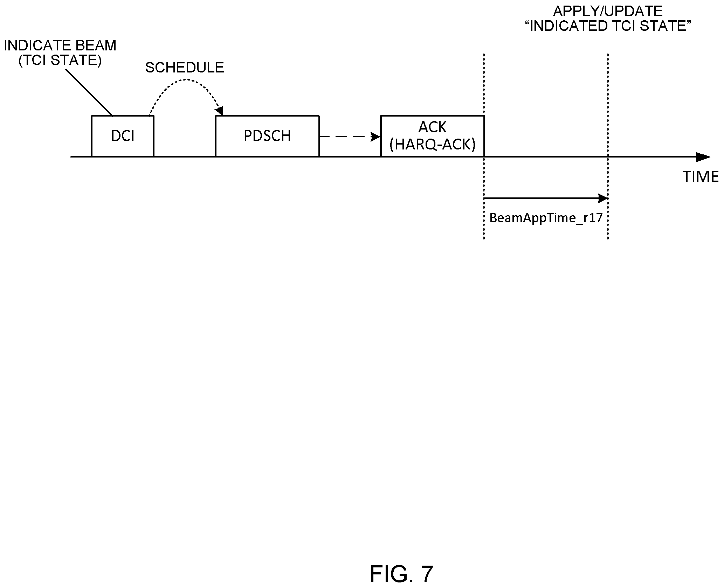

FIG. 7 is a diagram to show an example of a BAT defined in Rel. 17. In the example shown in FIG. 7, a UE receives beam indication DCI, and a PDSCH is scheduled by the DCI. Subsequently, the UE transmits an acknowledgement (ACK, HARQ-ACK) for the PDSCH.

In the example shown in FIG. 7, a UE initiates application of a TCI state(s) indicated by the DCI, (in the next slot) after the elapse of a time given by BeamAppTime_r17 from transmission of the HARQ-ACK corresponding to the beam indication DCI (last symbol of a PUSCH/PUCCH in which the HARQ-ACK is transmitted).

The UE may transmit an HARQ-ACK(s) related to one or a plurality of PDSCHs in one transmission occasion.

When the UE transmits HARQ-ACKs related to a plurality of PDSCHs in one transmission occasion, a TCI field of only one piece of DCI of pieces of DCI (one DCI of DCIs) for scheduling the plurality of PDSCHs is enabled (used as a TCI field for beam indication), and a TCI field(s) of the other piece(s) of DCI is disabled (not used as a TCI field for beam indication).

The DCI with the TCI field being enabled may be any DCI of the plurality of pieces of DCI (the plurality of DCI).

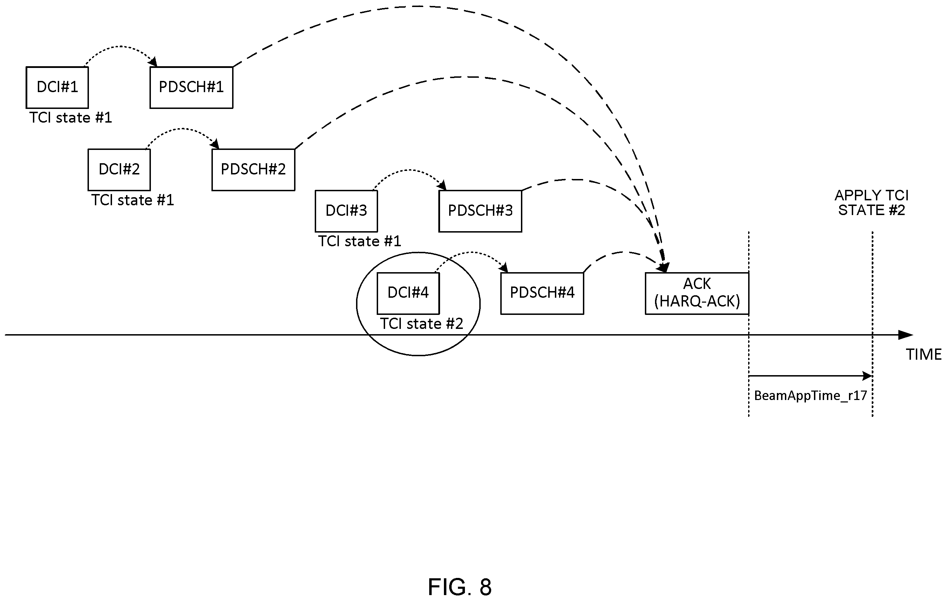

FIG. 8 is a diagram to show an example of application of TCI states when a plurality of pieces of beam indication DCI (a plurality of beam indication DCI) are received. In FIG. 8, a UE receives each of DCI #1 for scheduling PDSCH #1, DCI #2 for scheduling PDSCH #2, DCI #3 for scheduling PDSCH #3, and DCI #4 for scheduling PDSCH #4. HARQ-ACKs for PDSCHs #1 to #4 are transmitted in the same transmission occasion.

In the example shown in FIG. 8, DCI #1 to DCI #3 indicate TCI state #1, and DCI #4 indicates TCI state #2.

The UE initiates application of TCI state #2 indicated by DCI #4 (in the next slot) after the elapse of a period of a BAT from transmission of the HARQ-ACK (last symbol of a PUSCH/PUCCH in which the HARQ-ACK is transmitted). Here, the UE ignores the TCI state indicated by DCI #1 to DCI #3 (does not use the TCI state as a TCI state for beam indication).

Note that, although an example of applying the TCI state of the latest DCI in terms of time among the plurality of piece of DCI is shown in FIG. 8, DCI for indicating a TCI state to be applied may be any of DCI #1 to DCI #3.

### (Analysis)

It is studied that a TCI state introduced in Rel. 17 (Rel-17 TCI state, common TCI state) indicates one TCI state (M = 1, N = 1 or M = N = 1). In other words, it is studied that a Rel-17 TCI state is applicable only to a situation using a single TRP.

It is studied that a TCI state/spatial relation defined in Rel. 15/16 or previous versions (excluding a TCI state related to a reference signal for positioning) and a Rel-17 TCI state are not configured in the same band.

In this case, in the same band as a band in which the Rel-17 TCI state is configured, a function using a Rel-15/16 TCI state/spatial relation defined in Rel. 15 to Rel. 17 (feature, for example, operation using multi-TRP) cannot be configured.

To address this, it is necessary to enhance a common TCI state (Rel-17 TCI state) (for example, indicate two or more TCI states by using a MAC CE/DCI) in order to support a function using a Rel-15/16 TCI state/spatial relation including a multi-TRP scheme.

For example, for Rel. 18 or later versions, it is studied that a common TCI state is applicable to at least one multi-TRP scheme as those defined in Rel. 16/17 below:
- NCJTed single-DCI based PDSCHs (Rel. 16)
- NCJTed multi-DCI based PDSCHs (Rel. 16)
- single-DCI based SDMed/TDMed/FDMed PDSCH repetition transmission (Rel. 16)
- PDCCH/PUCCH/PUSCH repetition transmission using a plurality of TRPs (Rel. 17)
- operation related to inter-cell multi-TRP (Rel. 17)
- beam management for multi-TRP (Rel. 17)
- HST/SFN (Rel. 17)

Enhancement of a common TCI state may be used for beam indication in inter-cell (inter-band) carrier aggregation. In the beam indication in inter-cell (inter-band) carrier aggregation, one MAC CE/DCI may be used to indicate one or more TCI states in a plurality of different bands.

However, in transmission/reception of signals/channels using multi-TRP, study about configuration/indication/application of a common TCI state(s) has not been performed sufficiently. More specifically, study about application of a TCI state(s) by beam indication DCI and application of a TCI state(s) by scheduling/triggering DCI in a case of using a common TCI state(s) is not sufficient. In addition, study about operation with switching between transmission/reception using a single TRP and transmission/reception using multi-TRP is not sufficient. Unless such study is sufficient, degradation in communication quality, throughput reduction, and the like may occur.

Thus, the inventors of the present invention came up with the idea of a method of appropriately configuring/indicating/applying a TCI state(s) even when a TCI state(s) is applied to a plurality of types of signals/channels in transmission/reception of signals/channels using multi-TRP.

Embodiments according to the present disclosure will be described in detail with reference to the drawings as follows. The radio communication methods according to respective embodiments may each be employed individually, or may be employed in combination.

In the present disclosure, "A/B/C" and "at least one of A, B, and C" may be interchangeably interpreted. In the present disclosure, a cell, a serving cell, a CC, a carrier, a BWP, a DL BWP, a UL BWP, an active DL BWP, an active UL BWP, and a band may be interchangeably interpreted. In the present disclosure, an index, an ID, an indicator, and a resource ID may be interchangeably interpreted. In the present disclosure, a sequence, a list, a set, a group, a cluster, a subset, and the like may be interchangeably interpreted. In the present disclosure, "support," "control," "controllable," "operate," and "operable" may be interchangeably interpreted.

In the present disclosure, configuration (configure), activation (activate), update, indication (indicate), enabling (enable), specification (specify), and selection (select) may be interchangeably interpreted.

In the present disclosure, the higher layer signaling may be, for example, any one or combinations of Radio Resource Control (RRC) signaling, Medium Access Control (MAC) signaling, broadcast information, and the like. In the present disclosure, RRC, RRC signaling, an RRC parameter, a higher layer, a higher layer parameter, an RRC information element (IE), an RRC message, and a configuration may be interchangeably interpreted.

The MAC signaling may use, for example, a MAC control element (MAC CE), a MAC Protocol Data Unit (PDU), or the like. In the present disclosure, a MAC CE, an update command, and an activation/deactivation command may be interchangeably interpreted.

The broadcast information may be, for example, a master information block (MIB), a system information block (SIB), minimum system information (Remaining Minimum System Information (RMSI), SIB1), other system information (OSI), or the like.

In the present disclosure, a beam, a spatial domain filter, spatial setting, a TCI state, a UL TCI state, a unified TCI state, a unified beam, a common TCI state, a common beam, TCI assumption, QCL assumption, a QCL parameter, a spatial domain reception filter, a UE spatial domain reception filter, a UE receive beam, a DL beam, a DL receive beam, DL precoding, a DL precoder, a DL-RS, an RS of QCL type D in a TCI state/QCL assumption, an RS of QCL type A in a TCI state/QCL assumption, a spatial relation, a spatial domain transmission filter, a UE spatial domain transmission filter, a UE transmit beam, a UL beam, a UL transmit beam, UL precoding, a UL precoder, and a PL-RS may be interchangeably interpreted. In the present disclosure, a QCL type X-RS, a DL-RS associated with QCL type X, a DL-RS having QCL type X, a DL-RS source, an SSB, a CSI-RS, and an SRS may be interchangeably interpreted.

In the present disclosure, a panel, a UE panel, a panel group, an antenna group, a UE capability value, a UE capability value set, a specific (pool) index included in a PUSCH configuration, a specific (pool) index included in a PUCCH configuration, a specific (pool) index included in an SRS configuration, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted. The UE capability set may include the maximum number of SRS ports supported, for example.

The panel may be related to at least one of a group index of an SSB/CSI-RS group, a group index of group-based beam report, and a group index of an SSB/CSI-RS group for group-based beam report.

A panel Identifier (ID) and a panel may be interchangeably interpreted. In other words, a TRP ID and a TRP, a CORESET group ID and a CORESET group, and the like may be interchangeably interpreted.

In the present disclosure, a TRP, a transmission point, a panel, a DMRS port group, a CORESET pool, and one of two TCI states associated with one codepoint of a TCI field may be interchangeably interpreted.

In the present disclosure, a single TRP, a single-TRP system, single-TRP transmission, and a single PDSCH may be interchangeably interpreted. In the present disclosure, multi-TRP (a plurality of TRPs), a multi-TRP system, multi-TRP transmission, and multi-PDSCH may be interchangeably interpreted. In the present disclosure, single DCI, a single PDCCH, single-DCI based multi-TRP, and two TCI states in at least one TCI codepoint being activated may be interchangeably interpreted.

In the present disclosure, a single TRP, a channel using a single TRP, a channel using one TCI state/spatial relation, multi-TRP being not enabled by RRC/DCI, a plurality of TCI states/spatial relations being not enabled by RRC/DCI, and one CORESET pool index (CORESETPoolIndex) value being not configured for any CORESET and any codepoint of a TCI field being not mapped to two TCI states may be interchangeably interpreted.

In the present disclosure, multi-TRP, a channel using multi-TRP, a channel using a plurality of TCI states/spatial relations, multi-TRP being enabled by RRC/DCI, a plurality of TCI states/spatial relations being enabled by RRC/DCI, and at least one of single-DCI based multi-TRP and multi-DCI based multi-TRP may be interchangeably interpreted. In the present disclosure, multi-DCI based multi-TRP and one CORESET pool index (CORESETPoolIndex) value being configured for a CORESET may be interchangeably interpreted. In the present disclosure, single-DCI based multi-TRP and at least one codepoint in a TCI field being mapped to two TCI states may be interchangeably interpreted.

In the present disclosure, TRP #1 (first TRP) may correspond to CORESET pool index = 0 or may correspond to the first TCI state of two TCI states corresponding to one codepoint of a TCI field. TRP #2 (second TRP) TRP #1 (first TRP) may correspond to CORESET pool index = 1 or may correspond to the second TCI state of two TCI states corresponding to one codepoint of a TCI field.

In the present disclosure, single DCI (sDCI), a single PDCCH, a single-DCI based multi-TRP system, sDCI-based MTRP, and two TCI states in at least one TCI codepoint being activated may be interchangeably interpreted.

In the present disclosure, multi-DCI (mDCI), multi-PDCCH, a multi-DCI based multi-TRP system, mDCI-based MTRP, and two CORESET pool indices or CORESET pool index = 1 (or a value equal to one or greater) being configured may be interchangeably interpreted.

QCL in the present disclosure may be interchangeably interpreted as QCL type D.

In the present disclosure, "TCI state A is of the same QCL type D as that of TCI state **B,"** "TCI state A and TCI state B are the same," "TCI state A is QCL type D with TCI state B," and the like may be interchangeably interpreted.

In the present disclosure, a codepoint of a DCI field 'Transmission Configuration Indication,' a TCI codepoint, a DCI codepoint, and a TCI field codepoint may be interchangeably interpreted.

In the present disclosure, a single TRP and an SFN may be interchangeably interpreted. In the present disclosure, an HST, an HST scheme, a scheme for high speed movement, scheme 1, scheme 2, an NW pre-compensation scheme, HST scheme 1, HST scheme 2, and an HST NW pre-compensation scheme may be interchangeably interpreted.

In the present disclosure, a PDSCH/PDCCH using a single TRP, a PDSCH/PDCCH based on a single TRP, and a single TRP PDSCH/PDCCH may be interchangeably interpreted. In the present disclosure, a PDSCH/PDCCH using an SFN, a PDSCH/PDCCH using an SFN in multi, a PDSCH/PDCCH based on an SFN, and an SFN PDSCH/PDCCH may be interchangeably interpreted.

In the present disclosure, receiving a DL signal (PDSCH/PDCCH) by using an SFN may mean receiving the same data (PDSCH)/control information (PDCCH) and/or by using the same time/frequency resource, from a plurality of transmission/reception points. Receiving a DL signal by using an SFN may mean receiving the same data/control information and/or by using the same time/frequency resource, by using a plurality of TCI states/spatial domain filters/beams/QCLs.

In the present disclosure, an HST-SFN scheme, an SFN scheme of Rel. 17 or later versions, a new SFN scheme, a new HST-SFN scheme, an HST-SFN scenario of Rel. 17 or later versions, an HST-SFN scheme for an HST-SFN scenario, an SFN scheme for an HST-SFN scenario, scheme 1, HST-SFN scheme A/B, HST-SFN type A/B, a Doppler pre-compensation scheme, and at least one of scheme 1 (HST scheme 1) and a Doppler pre-compensation scheme may be interchangeably interpreted.

In the present disclosure, a Doppler pre-compensation scheme, a base station pre-compensation scheme, a TRP pre-compensation scheme, a pre-Doppler compensation scheme, an NW pre-compensation scheme, an HST NW pre-compensation scheme, a TRP pre-compensation scheme, a TRP-based pre-compensation scheme, HST-SFN scheme A/B, and HST-SFN type A/B may be interchangeably interpreted. In the present disclosure, a pre-compensation scheme, a reduction scheme, an improvement scheme, and a correction scheme may be interchangeably interpreted.

In the present disclosure, PDCCHs/search spaces (SSs)/CORESETs having a linkage, linked PDCCHs/SSs/CORESETs, and a pair of PDCCHs/SSs/CORESETs may be interchangeably interpreted. In the present disclosure, a PDCCH/search space (SS)/CORESET having no linkage, a not linked PDCCH/SS/CORESET, and a single PDCCH/SS/CORESET may be interchangeably interpreted.

In the present disclosure, two linked CORESETs for PDCCH repetition and two CORESETs associated with two respective linked SS sets may be interchangeably interpreted.

In the present disclosure, SFN-PDCCH repetition, PDCCH repetition, two linked PDCCHs, one DCI being received over two linked search spaces (SSs)/CORESETs may be interchangeably interpreted.

In the present disclosure, PDCCH repetition, SFN-PDCCH repetition, PDCCH repetition for higher reliability, a PDCCH for higher reliability, a PDCCH for reliability, and two linked PDCCHs may be interchangeably interpreted.

In the present disclosure, a PDCCH reception method, PDCCH repetition, SFN-PDCCH repetition, an HST-SFN, and an HST-SFN scheme may be interchangeably interpreted.

In the present disclosure, a PDSCH reception method, single-DCI based multi-TRP, and an HST-SFN scheme may be interchangeably interpreted.

In the present disclosure, single-DCI based multi-TRP repetition may be NCJT of an enhanced mobile broadband (eMBB) service (low priority, priority degree 0), or may be repetition of a URLLC service, that is, an ultra-reliable and low latency communications service (high priority, priority degree 1).

In each of the embodiments of the present disclosure, a PDSCH for a plurality of single-DCI based TRPs and a PDSCH to which TDM/FDM/SDM for a plurality of TRPs (defined in Rel. 16) is applied may be interchangeably interpreted.

In each of the embodiments of the present disclosure, a PDSCH for a plurality of TRPs and a PDSCH to which TDM/FDM/SDM for a plurality of single-DCI based TRPs (defined in Rel. 16) is applied may be interchangeably interpreted.

In each of the embodiments of the present disclosure, a PUSCH/PUCCH/PDCCH for a plurality of single-DCI based TRPs and repetition transmission (repetition) of a PUSCH/PUCCH/PDCCH for a plurality of TRPs (defined in Rel. 17 or later versions) may be interchangeably interpreted.

In each of the embodiments of the present disclosure, an SFN PDSCH/PDCCH and an SFN PDSCH/PDCCH defined in Rel. 17 or later versions may be interchangeably interpreted.

In each of the embodiments of the present disclosure, use of a plurality of multi-DCI based TRPs being configured may mean that CORESET pool index = 1 is configured. Alternatively, use of a plurality of multi-DC based TRPs being configured may mean that two different values (for example, 0 and 1) of a CORESET pool index are configured.

In each of the embodiments of the present disclosure, UL transmission using a plurality of panels may mean a UL transmission scheme using a plurality of panels of a UE by DCI enhancement.

Each of the embodiments of the present disclosure below may be applied to transmission/reception of any channel/signal being a target of application of a unified TCI state framework defined in Rel. 17 or later versions described above.

In the present disclosure, applying a TCI state to each channel/signal/resource may mean applying a TCI state to transmission/reception of each channel/signal/resource.

In the present disclosure, small, little, short, and low may be interchangeably interpreted. In the present disclosure, "ignore," "drop," "cancel," "suspend," and "postpone" may be interchangeably interpreted.

In the present disclosure, repetition, repetition transmission, and repetition reception may be interchangeably interpreted.

In the present disclosure, a channel, a signal, and a channel/signal may be interchangeably interpreted. In the present disclosure, a DL channel, a DL signal, a DL signal/channel, transmission/reception of a DL signal/channel, DL reception, and DL transmission may be interchangeably interpreted. In the present disclosure, a UL channel, a UK signal, a UL signal/channel, transmission/reception of a UL signal/channel, UL reception, and UL transmission may be interchangeably interpreted.

In the present disclosure, a first TCI state may correspond to a first TRP. In the present disclosure, a second TCI state may correspond to a second TRP. In the present disclosure, an n-th TCI state may correspond to an n-th TRP.

In the present disclosure, the value of a first CORESET pool index (for example, 0), the value of a first TRP index (for example, 1), and a first TCI state (first DL/UL (joint/separate) TCI state) may correspond to each other. In the present disclosure, the value of a second CORESET pool index (for example, 1), the value of a second TRP index (for example, 2), and a second TCI state (second DL/UL (joint/separate) TCI state) may correspond to each other.

Note that, in each of the embodiments of the present disclosure below, description will be mainly given of a method targeting two TRPs for application of a plurality of TCI states in transmission/reception using a plurality of TRPs (in other words, at least one of N and M is 2). However, the number of TRPs may be three or more (more than one), and each embodiment may be applied in accordance with the number of TRPs. In other words, at least one of N and M may be a number larger than two.

### (Radio Communication Method)

### <Zeroth Embodiment>

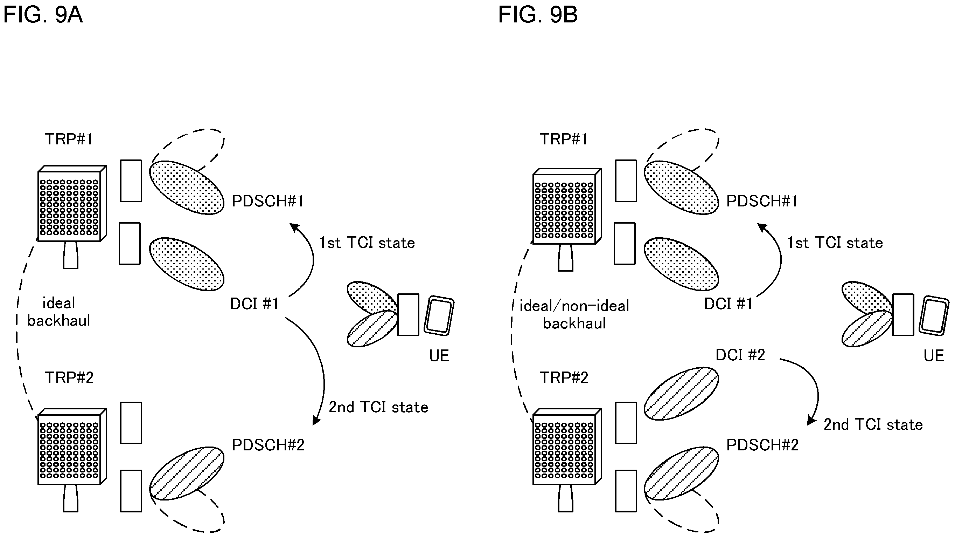

It may be assumed that single-DCI based multi-TRP are supported when multi-TRP use ideal backhaul (see FIG. 9A).

In this case, one piece of beam indication DCI may indicate a plurality of TCI states for the respective TRPs. The plurality of TCI states may be two joint TCI states at maximum or four separate DL/UL TCI states (two DL TCI states and two UL TCI states) at maximum, for example.

In the present disclosure, one TCI state may mean one joint (DL/UL) TCI state or may mean at least one of one DL (separate) TCI state and one UL (separate) TCI state.

It may be assumed that multi-PDCCH (DCI) are supported when multi-TRP use ideal backhaul/non-ideal backhaul (see FIG. 9B).

In this case, one piece of DCI associated with one TRP (CORESET pool index) may indicate a TCI state corresponding to the TRP.

Note that the ideal backhaul may be referred to as DMRS port group type 1, reference signal related group type 1, antenna port group type 1, CORESET pool type 1, and the like. The non-ideal backhaul may be referred to as DMRS port group type 2, reference signal related group type 2, antenna port group type 2, CORESET pool type 2, and the like. The names are not limited to these.

A field indicating a TCI state (TCI field) included in DCI may conform to at least one of choices 0-1 and 0-2 below.

### {Choice 0-1}

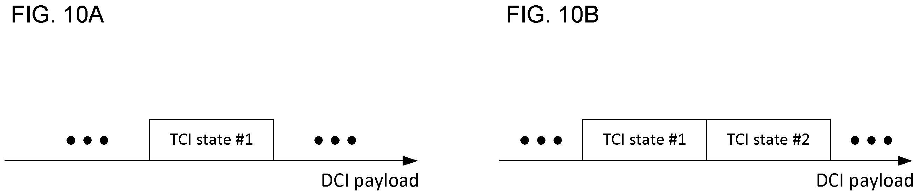

A TCI field defined in Rel. 15/16 or previous versions may be reused (see FIG. 10A). As shown in FIG. 10A, DCI may include one TCI field. The number of bits of the TCI field may be a specific number (for example, three).

### {Choice 0-2}

A TCI field defined in Rel. 15/16 or previous versions may be enhanced (see FIG. 10B). For example, DCI may include a plurality of (for example, two) TCI fields. The number of bits of each TCI field may be a specific number (for example, three).

In choice 0-2, for DCI without DL assignment, DCI overhead is never added. In contrast, for DCI with DL assignment, DCI overhead is added.

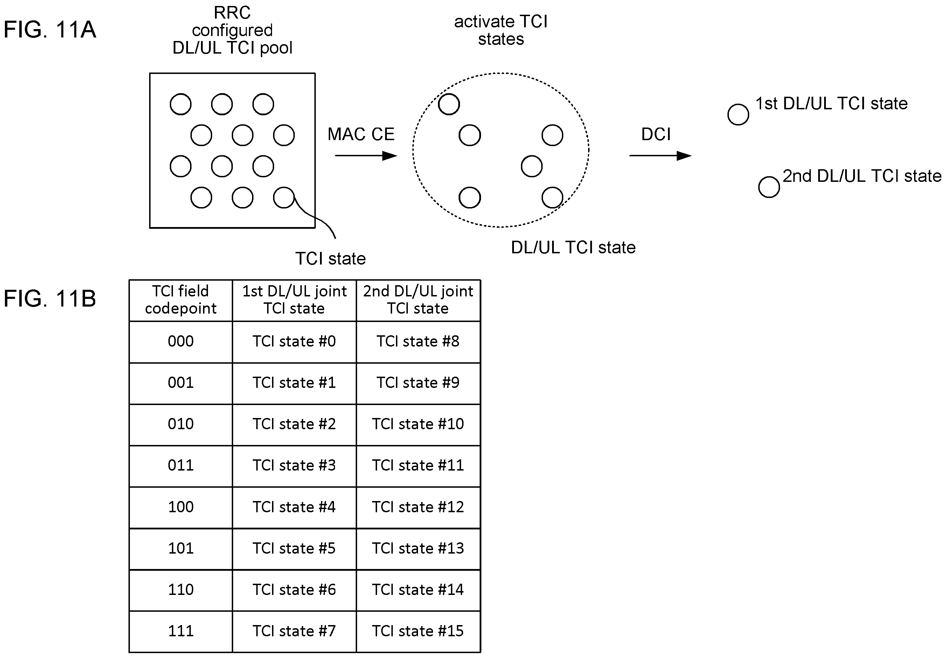

For single-DCI based multi-TRP, in a case of joint TCI states, DL/UL (joint) TCI states may be activated for a UE by using a MAC CE. Subsequently, the UE may be indicated with a first DL/UL (joint) TCI state and a second DL/UL (joint) TCI state by using DCI (beam indication) (see FIG. 11A).

A TCI codepoint indicated by the beam indication may correspond to one or a plurality of (two) TCI states (first joint TCI state/second joint TCI state) (see FIG. 11B).

The example shown in FIG. 11B shows an example that all the TCI codepoints corresponding to active TCI states each correspond to two TCI states. However, such association may be used that at least one of the TCI codepoints corresponding to the active TCI states corresponds to two TCI states. Using such association enables dynamic switching between a single TRP and multi-TRP.

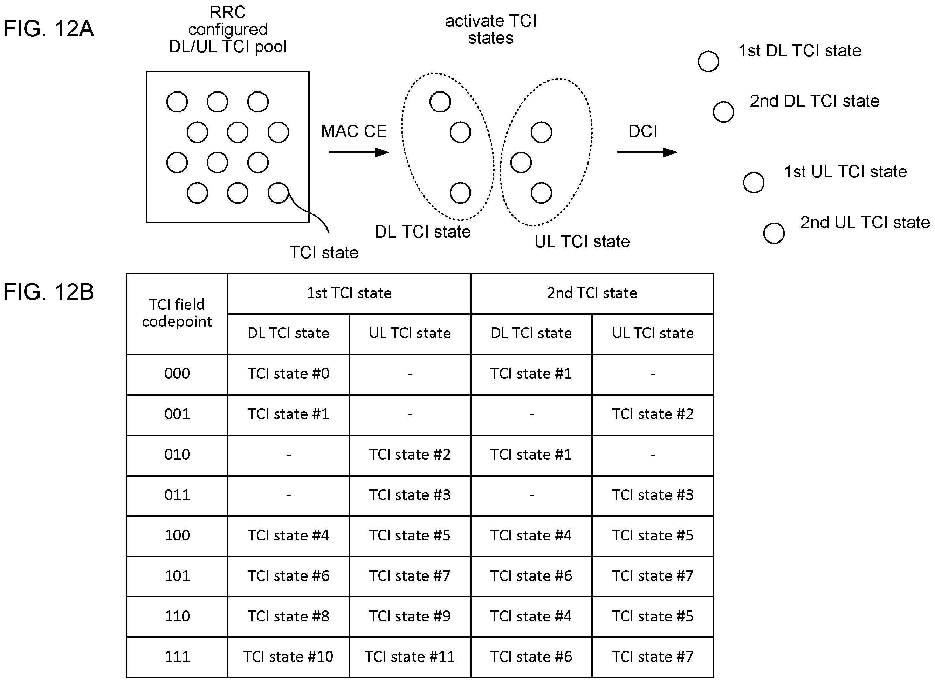

For single-DCI based multi-TRP, in a case of separate TCI states, DL (separate) TCI states and UL (separate) TCI states may be activated for a UE by using a MAC CE. Subsequently, the UE may be indicated with a first DL (separate) TCI state and a first UL (separate) TCI state as well as a second DL (separate) TCI state and a second UL (separate) TCI state by using DCI (beam indication) (see FIG. 12A).

A TCI codepoint indicated by the beam indication may correspond to one or a plurality of (two) TCI states (first separate (DL/UL) TCI state(s)/second separate (DL/UL) TCI state(s)) (see FIG. 12B).

The example shown in FIG. 12B shows an example that all the TCI codepoints corresponding to active TCI states each correspond to two TCI states (first separate (DL/UL) TCI state(s)/second separate (DL/UL) TCI state(s)). However, such association may be used that at least one of the TCI codepoints corresponding to the active TCI states corresponds to two TCI states. Using such association enables dynamic switching between a single TRP and multi-TRP.

Note that FIG. 12A shows the example that separate TCI states are activated for DL TCI states and UL TCI states, for TCI states activated by a MAC CE. However, even in a case of separate TCI states, activated DL TCI states and UL TCI states may include a common TCI state(s).

For multi-DCI based multi-TRP, at least one of configuration by RRC, activation by a MAC CE, and indication by DCI for TCI states may be performed for each CORESET pool index.

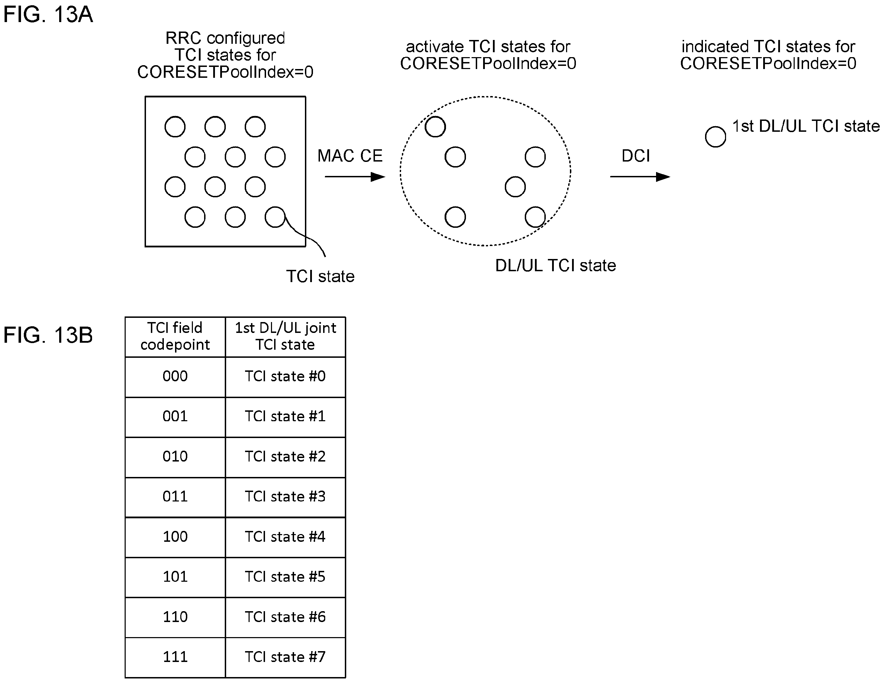

For multi-DCI based multi-TRP, in a case of joint TCI states, configuration by RRC, activation by a MAC CE, and indication by DCI for TCI states may be performed for a UE for a CORESET pool index having a first value (for example, 0) (see FIG. 13A). An indicated TCI state corresponding to the CORESET pool index having the first value may be referred to as a first TCI state.

A TCI codepoint indicated by the beam indication may correspond to one TCI state (first joint TCI state) (see FIG. 13B).

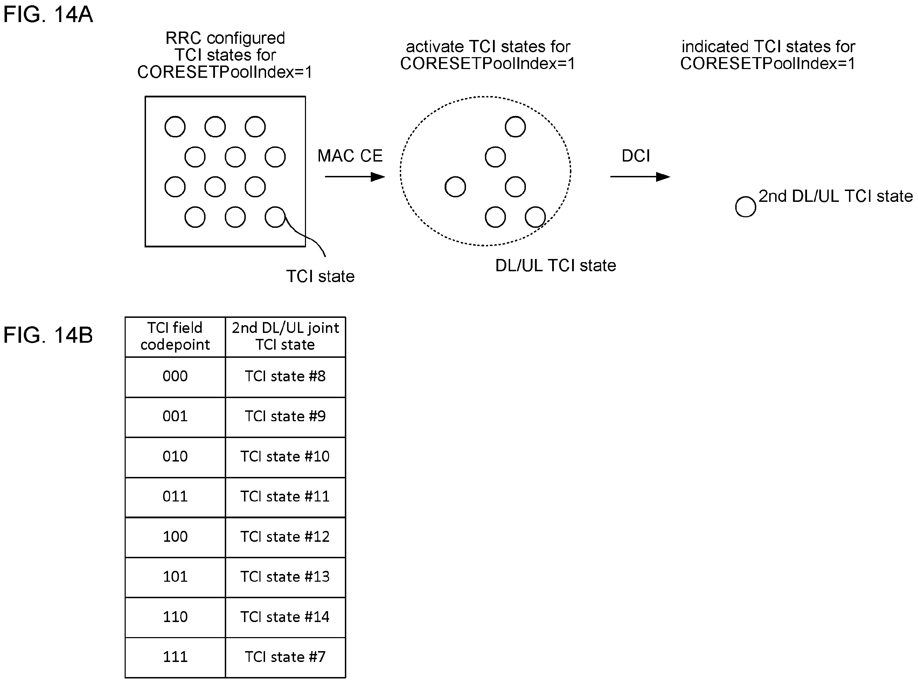

For multi-DCI based multi-TRP, in a case of joint TCI states, configuration by RRC, activation by a MAC CE, and indication by DCI for TCI states may be performed for a UE for a CORESET pool index having a second value (for example, 1) (see FIG. 14A). An indicated TCI state corresponding to the CORESET pool index having the second value may be referred to as a second TCI state.

A TCI codepoint indicated by the beam indication may correspond to one TCI state (second joint TCI state) (see FIG. 14B).

When pieces of DCI (DCIs) corresponding to respective CORESET pool indices indicate the same TCI state (TCI state ID) (for example, when TCI state #7 corresponding to a TCI codepoint "111" in FIG. 13B and FIG. 14B is indicated), the UE may determine that one TCI state is indicated. In this case, the UE may perform operation using a single TRP.

Note that, for the multi-DCI based multi-TRP, an example using joint TCI states has been described. However, this embodiment is also applicable to a case using separate TCI states, as appropriate.

In the present disclosure, an indicated TCI state, a Rel-17 TCI state, a common TCI state, and a unified TCI state may be interchangeably interpreted. In the present disclosure, a common TCI state, a Rel-17 TCI state, and a Rel-18 TCI state applied to channels/signals using multi-TRP may be interchangeably interpreted.

A UE may apply an indicated TCI state to a specific channel/signal.

The specific channel/signal may be a UE-specific (dedicated) DL channel/signal. The UE-specific DL channel/signal may be a UE-specific PDCCH/PDSCH/CSI-RS (for example, aperiodic (A-)CSI-RS).

The specific channel/signal may be a specific UL channel/signal. The specific UL channel/signal may be at least one of a PUSCH indicated by DCI (indicated by dynamic grant), a configured grant PUSCH, a plurality of (all) specific PUCCHs (resources), and an SRS (for example, an aperiodic (A-)SRS).

One or a plurality of (for example, two) indicated TCI states may be indicated based on the method described in the zeroth embodiment described above.

Each of the embodiments of the present disclosure below may be applied to a single-TRP PDSCH.

The single-TRP PDSCH may be scheduled by specific DCI (DCI format). The specific DCI format may be DCI format 1_0 (or a DCI format including no TCI field), for example. For example, the specific DCI format may be DCI format 1_1/1_2. The specific DCI format may indicate one TCI state.

QCL assumption of the single-TRP PDSCH may be a default TCI state. The default TCI state may be one TCI state (in any DCI format).

For a UE, no multi-TRP repetition transmission may be configured. In this case, the single-TRP PDSCH may be scheduled as a single-layer MIMO PDSCH (with single layer MIMO).

The singe-TRP PDSCH may be a PDSCH of a case where multi-TRP (for example, a CORESET pool indices) are not configured for the UE.

The single-TRP PDSCH may be a PDSCH scheduled by a CORESET at least with a CSS. The single-TRP PDSCH may be a PDSCH scheduled by a CORESET only with a CSS (or CSS excluding type 3 CSS).

Each of the embodiments of the present disclosure below may be applied to a multi-TRP PDSCH.

The single-TRP PDSCH may be scheduled by specific DCI (DCI format). The specific DCI format may be DCI format 1_1/1_2. The specific DCI format may indicate two TCI states.

QCL assumption of the multi-TRP PDSCH may be default TCI states. The default TCI states may be two TCI state (in any DCI format).

For a UE, no multi-TRP repetition transmission may be configured. In this case, the multi-TRP PDSCH may be scheduled as a multi-layer MIMO PDSCH (with single layer MIMO).

The multi-TRP PDSCH may be a PDSCH of a case where multi-TRP repetition transmission is configured for the UE. In this case, the multi-TRP PDSCH may be scheduled as a PDSCH for repetition transmission (using TDM/FDM/SDM) (with repetition).

The multi-TRP PDSCH may be a PDSCH of a case where SFN scheme A/B is configured for the UE. The multi-TRP PDSCH may be a PDSCH having a plurality of TCI states.

Each of the embodiments of the present disclosure below may be applied to a single-TRP PDCCH.

The single-TRP PDCCH may be a PDCCH related to a CORESET for which SFN scheme A/B is not configured.

The single-TRP PDCCH may be a PDCCH related to a CORESET for which repetition transmission (of two linked SSs) is not configured.

Each of the embodiments of the present disclosure below may be applied to a multi-TRP PDCCH.

The multi-TRP PDCCH may be a PDCCH related to a CORESET for which SFN scheme A/B is configured.

Each of the embodiments of the present disclosure below may be applied to a single-TRP PUSCH/PUCCH.

The single-TRP PUSCH/PUCCH may be a PUSCH/PUCCH for which multi-TRP repetition transmission is not configured.

Each of the embodiments of the present disclosure below may be applied to a multi-TRP PUSCH/PUCCH.

The multi-TRP PUSCH/PUCCH may be a PUSCH/PUCCH for which multi-TRP repetition transmission is configured.

Each of the embodiments of the present disclosure below may be applied to a single/multi-TRP CSI-RS/SRS.

In the present disclosure, transmission/reception using a single TRP, a single-TRP mode, a channel/signal using a single TRP may be interchangeably interpreted. In the present disclosure, transmission/reception using multi-TRP, a multi-TRP mode, and a channel/signal using multi-TRP may be interchangeably interpreted. In the present disclosure, a single/multi-TRP being configured/indicated, single/multi-TRP transmission/reception being configured/indicated, a single/multi-TRP mode being configured/indicated, and a channel/signal using a single/multi-TRP being configured/indicated/scheduled/triggered may be interchangeably interpreted.

In the present disclosure, "schedule," "trigger," "indicate," "configure," and "activate" may be interchangeably interpreted.

### <First Embodiment>

In a first embodiment, description will be given of a TCI field included in DCI.

The number of bits of a TCI field included in beam indication DCI may be a specific value (for example, a fixed value).

The specific value may be configured for a UE by using higher layer signaling (RRC signaling).

The UE may receive a plurality of pieces of DCI (a plurality of DCI) for scheduling a plurality of PDSCHs. Here, one piece of DCI may schedule one PDSCH.

The UE may transmit HARQ-ACKs related to the plurality of PDSCHs in one transmission occasion.

In the present disclosure, a (HARQ-ACK) transmission occasion, a PUSCH, a PUCCH, a PUSCH/PUCCH resource, and a slot may be interchangeably interpreted.

When the UE transmits the HARQ-ACKs related to the plurality of PDSCHs in one transmission occasion, a TCI field of only one piece of DCI of the respective pieces of DCI (the respective DCI) for scheduling the plurality of PDSCHs may be enabled (used as a TCI field for beam indication), and a TCI field(s) of the other piece(s) of DCI may be disabled (not used as a TCI field for beam indication).

The DCI with the TCI field being enabled may be any DCI of the plurality of pieces of DCI (the plurality of DCI). In the present disclosure, the DCI with the TCI field to be used (TCI field being enabled) (for example, DCI #4 in FIG. 8 above) may be referred to as "specific DCI."

The TCI field(s) included in the one or plurality of pieces of DCI (one or plurality of DCI) each with the TCI field not to be used (TCI field being disabled) (for example, DCI #1 to DCI #3 in FIG. 8 above) may be used for a different purpose/usage. In the present disclosure, each DCI with the TCI field not to be used (TCI field being disabled) (for example, DCI #1 to DCI #3 in FIG. 8 above) may be referred to as the "other piece(s) of DCI (another DCI) ."

In the present disclosure, a "TCI field is enabled," a "TCI field is used," and a "TCI field is used as a TCI field for beam indication" may be interchangeably interpreted.

In the present disclosure, a "TCI field is disabled," a "TCI field is not used," and a "TCI field is not used as a TCI field for beam indication" may be interchangeably interpreted.

In the following, description will be given of indication of a TCI state of each scheduled/triggered channel/signal (for example, at least one of a scheduled PDSCH/PUSCH and a triggered aperiodic (A-)SRS/A-CSI-RS/PUCCH (for example, HARQ-ACK)).

For the UE, one or a plurality of (for example, two) TCI states may be indicated by beam indication DCI. The TCI state(s) may be an "indicated TCI state(s)." Application of the "indicated TCI state(s)" may be initiated (in the next slot) after the elapse of the BAT as described above.

The UE may receive DCI for scheduling/triggering each channel/signal (scheduling/triggering DCI). The scheduling/triggering DCI may be the same DCI as or different from the beam indication DCI.

The UE may follow at least one of options 1-A and 1-B below for a TCI field of DCI not indicating an "indicated TCI state(s)" (scheduling/triggering DCI).

### {Option 1-A}

When an "indicated TCI state" is applied to a channel/signal and a plurality of (for example, two) "indicated TCI states" are indicated, the UE may select/determine one TCI state of the plurality of "indicated TCI states," based on scheduling/triggering DCI ("another DCI").

A TCI field included in the scheduling/triggering DCI may indicate which of the plurality of indicated TCI states to apply.

When the "indicated TCI state" is only one and the one indicated TCI state is applied to a channel/signal, the UE may ignore a TCI state in the scheduling/triggering DCI ("another

### DCI").

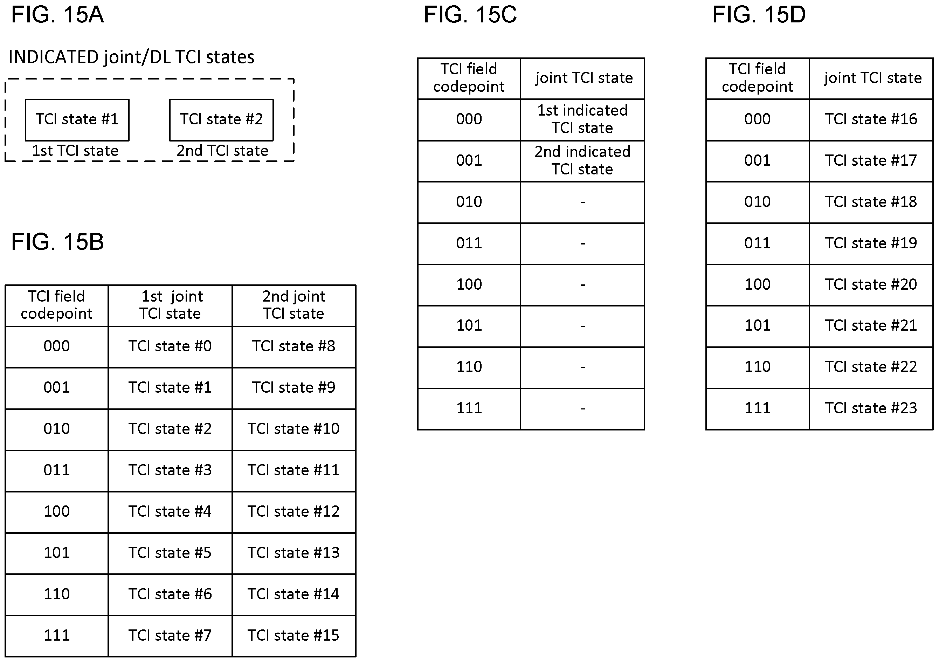

FIG. 15A to FIG. 15D are diagrams to show an example of TCI state indication according to option 1-A/1-B.

As shown in FIG. 15A, for a UE, a plurality of "indicated TCI states" may be indicated by beam indication DCI. The example shown in FIG. 15A is a state where TCI state #1 is indicated as a first TCI state, while TCI state #2 is indicated as a second TCI state, for the UE.

Note that, although joint/(separate) DL TCI states are indicated as the indicated TCI states in FIG. 15A, indicated TCI states may be (separate) UL TCI states.

FIG. 15B shows an example of a TCI field included in "specific DCI." In FIG. 15B, the TCI field included in the specific DCI indicates "indicated TCI states." The UE initiates application of the "indicated TCI states" according to the TCI field (in the next slot) after the elapse of a BAT from transmission of an HARQ-ACK related to the specific DCI (last symbol of a PUSCH/PUCCH in which the HARQ-ACK is transmitted), based on the TCI field included in the specific DCI. In other words, the UE changes/updates from a state of applying "indicated TCI states" as those shown in FIG. 15A to a state of applying "indicated TCI states" as those shown in FIG. 15B.

FIG. 15C is a diagram to show an example of a TCI field according to option 1-A. The example shown in FIG. 15C illustrates (interpretation) of a TCI field included in scheduling/triggering DCI (in particular, "another DCI").

In the example shown in FIG. 15C, the UE determines a TCI state to apply to each channel/signal, based on the TCI field included in the scheduling/triggering DCI of the channel/signal.

In this case, the UE may determine to apply any TCI state of "indicated TCI states" application of which is already initiated, based on the TCI field.

In the example shown in FIG. 15C, when a codepoint of the TCI field included in the scheduling/triggering DCI is "000," the UE determines to apply a first TCI state (in other words, TCI state #1 in FIG. 15A) of the indicated TCI states to a channel/signal corresponding to the DCI. When a codepoint of the TCI field included in the scheduling/triggering DCI is "001," the UE determines to apply a second TCI state (in other words, TCI state #2 in FIG. 15A) of the indicated TCI states to a channel/signal corresponding to the DCI.

In this case, the UE need not assume/expect to receive DCI including a TCI field indicating a codepoint not indicating any of a plurality of "indicated TCI states" (for example, in the example in FIG. 15C, codepoints "010" to "111").

### {Option 1-B}

For a UE, a list of TCI states may be configured. The list may include a plurality of TCI states. As described above, the list of TCI states may be configured by using RRC signaling. The TCI states may each be referred to as a "configured TCI state."

For the UE, the list of TCI states may be configured, and one or a plurality of TCI states may be activated from the list. As described above, the TCI state(s) may be activated by using a MAC CE. The TCI states may also each be referred to as a "configured TCI state."

The UE may apply at least one "configured TCI state" to each channel/signal. In this case, the UE may apply one or a plurality of (for example, two) TCI states of "configured TCI states," based on a TCI field included in scheduling/triggering DCI (in particular, "another DCI") of the channel/signal.

FIG. 15D is a diagram to show an example of a TCI field according to option 1-B. The example shown in FIG. 15D illustrates a TCI field included in scheduling/triggering DCI (in particular, "another DCI").

In the example shown in FIG. 15D, the UE determines a TCI state to apply to each channel/signal, based on the TCI field included in the scheduling/triggering DCI of the channel/signal.

In FIG. 15D, for example, when a codepoint of the TCI field included in the scheduling/triggering DCI is "000," the UE determines to apply TCI state #16 of the configured TCI states to a channel/signal scheduled/triggered by the DCI.

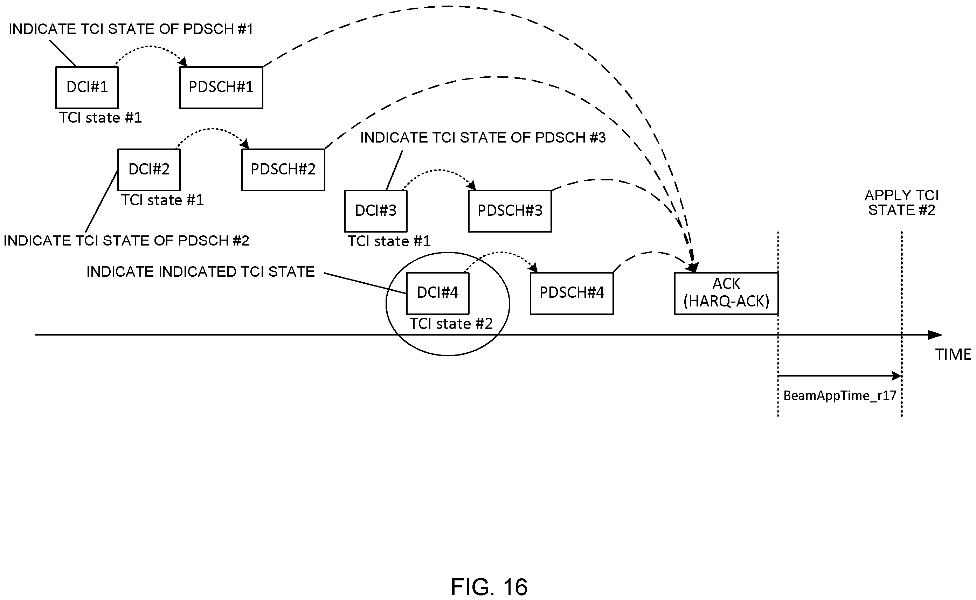

FIG. 16 is a diagram to show an example of application of TCI states according to a first embodiment. Reception of pieces of DCI (Reception of DCI) and schedule of PDSCHs in FIG. 16 are similar to those in FIG. 8 described above.

A UE applies PDSCH #1 to PDSCH #3, based on TCI fields included in DCI #1 to DCI #3. As described above, DCI #1 to DCI #3 are each DCI with a TCI field included in the DCI not being used for indication of an "indicated TCI state." In the example shown in FIG. 16, DCI #1 to DCI #3 indicate TCI state #1, and hence the UE applies TCI state #1 to PDSCH #1 to PDSCH #3.

The UE determines to initiate application of a TCI state indicated by DCI #4, (in the next slot) after the elapse of a BAT (BeamAppTime_r17) from transmission of an HARQ-ACK related to the DCI (last symbol of a PUSCH/PUCCH in which the HARQ-ACK is transmitted).

Note that the "specific DCI" and "another DCI" above may correspond to (a transmission occasion (PUSCH/PUCCH/slot) for transmitting) the same HARQ-ACK. In this case, any of a plurality of pieces of DCI (a plurality of DCI) corresponding to the same HARQ-ACK may be determined to be the "specific DCI" or "another DCI" above, based on the time/frequency domain resources of (the PDCCHs/CORESETs/search spaces of) the plurality of pieces of DCI (the plurality of DCI).

For example, the specific DCI may be the earliest/latest DCI in the time domain of the plurality of pieces of DCI (the plurality of DCI) (the PDCCHs/CORESETs/search spaces for transmitting the plurality of respective pieces of DCI (the plurality of respective DCI)). For example, the specific DCI may be DCI of the lowest/highest CC (component carrier) index (or CCE (control channel element) index) in the frequency domain of the plurality of pieces of DCI (the plurality of DCI) (the PDCCHs/CORESETs/search spaces for transmitting the plurality of respective pieces of DCI (the plurality of respective DCI)). The specific DCI may be determined according to a rule for selecting one piece of DCI for determining PUCCH resource indication (for example, a rule based on a CCE index/PRI (PUCCH resource indicator)). At least two of such rules may be applied in combination.

According to the first embodiment above, it is possible to appropriately apply a TCI state to each channel/signal and initiate application of a common TCI state even when a plurality of pieces of DCI (a plurality of DCI) for scheduling/triggering a plurality of channels/signals are received.

Note that the first embodiment described above may be applied in at least one of a case where a single TRP is configured (single-TRP mode) and a case where multi-TRP are configured (multi-TRP mode).

### <Variations of First Embodiment>

For an "indicated TCI state" in Rel. 17, a case where the "indicated TCI state" cannot be controlled by scheduling/triggering DCI is assumed.

In this case, occurrence of delay of beam indication is a problem.

In view of this, a method of solving such a problem will be described below.

For a UE, a set including one or a plurality of common TCI states (indicated TCI state(s)) may be indicated. For the UE, one or a plurality of the sets may be indicated.

The indication may be performed by using a MAC CE/DCI, for example.

For the UE, the one or plurality of the sets may be indicated by beam indication DCI (for example, DCI format 1_1/1_2 with/without DL assignment).

When the plurality of sets are indicated, a TCI state of each channel/signal scheduled/triggered by scheduling/triggering DCI (for example, DCI format 0_1/0_2/1_1/1_2) may be indicated for the UE.

In this case, the indicated TCI state may be indicated by a plurality of pieces of DCI (a plurality of DCI) (in other words, the beam indication DCI and the scheduling/triggering DCI). Such indication may be referred to as 2-stage (step) DCI indication.

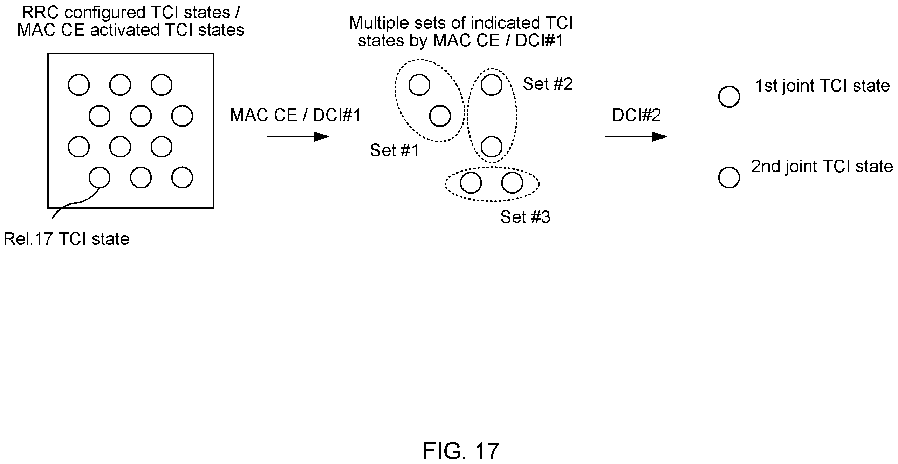

FIG. 17 is a diagram to show an example of indication of TCI states according to a variation of the first embodiment. In the example shown in FIG. 17, a plurality of TCI states are configured/activated by using RRC signaling/MAC CE for a UE.

In the example shown in FIG. 17, the UE is indicated with multiple sets of TCI states by using a MAC CE/DCI (DCI #1). This DCI #1 may be beam indication DCI, for example. Subsequently, the UE is indicated with two TCI states (first joint TCI state and second joint TCI state) by using DCI #2. This DCI #2 may be scheduling/triggering DCI, for example.

Note that, although an example of a plurality of (two) TCI states in multi-TRP (mode) has been described in the example in FIG. 17, this variation is also applicable to a single TRP (mode).

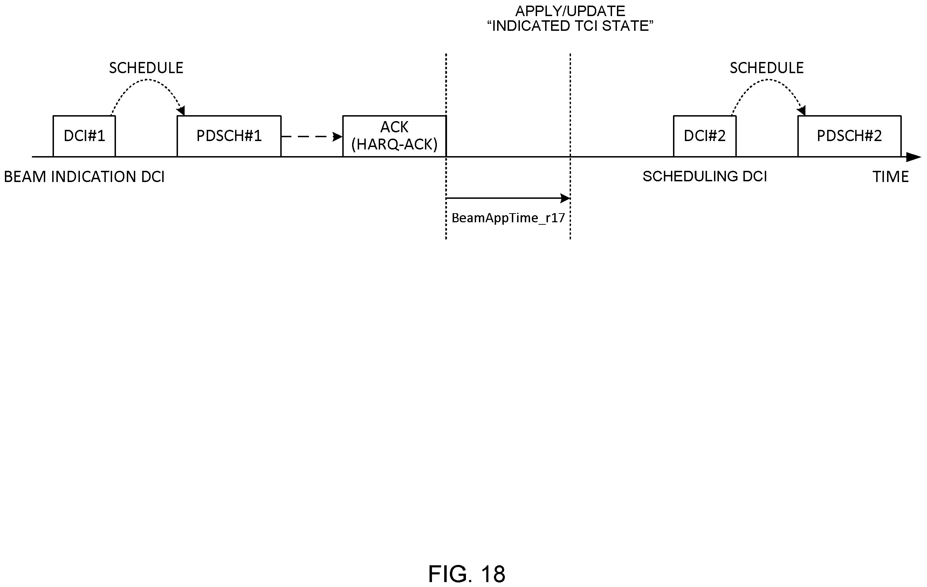

FIG. 18 is a diagram to show another example of the indication of TCI states according to the variation of the first embodiment. In the example shown in FIG. 18, a UE receives DCI #1 as beam indication DCI. Application of the TCI state indicated by DCI #1 is initiated (in the next slot) after the elapse of a specific period (BAT) from transmission of an HARQ-ACK related to DCI #1 (last symbol of a PUSCH/PUCCH in which the HARQ-ACK is transmitted).

Subsequently, the UE receives DCI #2, which is scheduling DCI for PDSCH #2.

In the example shown in FIG. 18, 2-stage DCI indication is indicating a TCI state to be applied to PDSCH #2, based on respective TCI fields included in DCI #1 and DCI #2.

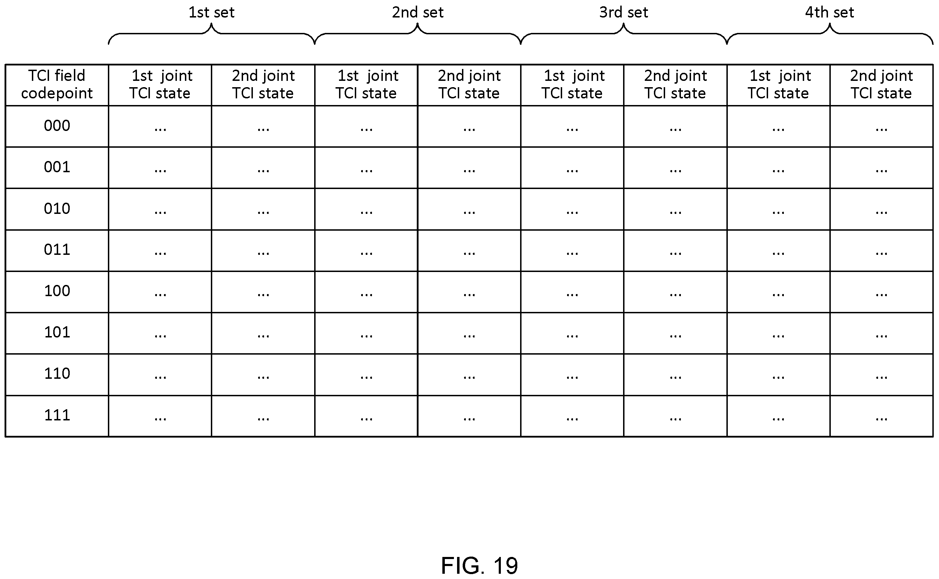

FIG. 19 is a diagram to show another example of the indication of TCI states according to the variation of the first embodiment. In FIG. 19, a correspondence relationship between codepoints of a TCI field and TCI states is shown.

In the example shown in FIG. 19, four sets (first to fourth sets) are indicated for a UE. In 2-stage DCI indication, a codepoint of a TCI field is indicated for the UE by beam indication DCI (for example, DCI #1 in FIG. 18 described above). Subsequently, for the UE, one set of the four sets is indicated by using a specific field (for example, a TCI state) included in scheduling/triggering DCI (for example, DCI #2 in FIG. 18 described above).

As described above, by applying 2-stage DCI indication, the size of a TCI field can be reduced.

In Rel. 15, for DCI format 1_1, the number of bits of a TCI field can be configured to be 3 bits by RRC.

In Rel. 16, for DCI format 1_2, the number of bits of a TCI field can be configured to be 0 to 3 bits by RRC.

When 2-stage DCI indication is supported, the number of TCI states can be reduced.

For example, when 2-stage DCI indication is not supported (in other words, indication by existing DCI, which may be referred to as 1-stage (step) DCI indication), a 3-bit TCI field of beam indication DCI is used, and hence one TCI state can be selected from among eight TCI states at maximum.

In contrast, when 2-stage DCI indication is supported, a 3-bit TCI field of beam indication DCI and a 3-bit TCI field of scheduling/triggering DCI can be used, and hence one TCI state can be selected from among 64 TCI states at maximum.

This means, in comparison to a case of applying 1-stage DCI indication, the number of bits of a TCI field included in each DCI can be reduced when 2-stage DCI indication with the same flexibility (specifically, by selecting one TCI state from among eight TCI states at maximum) is applied.

Note that, in the 2-stage DCI indication described above, beam indication DCI and scheduling/triggering DCI may be interchangeably interpreted.

Note that an "indicated TCI state(s)" may be shared by different channels/signals. When a UE does not receive DCI (for example, scheduling/triggering DCI) indicating one set of a plurality of TCI states, the UE may determine to select a specific set.

The specific set may be defined in a specification in advance. The specific set may be a set having the lowest (or highest) index, for example.

The specific set may be configured (as a default) for the UE by using higher layer signaling (RRC).

Note that the variations may be applied only to a case where a plurality of sets (of TCI states) are indicated (configured) for a UE.

### <Second Embodiment>

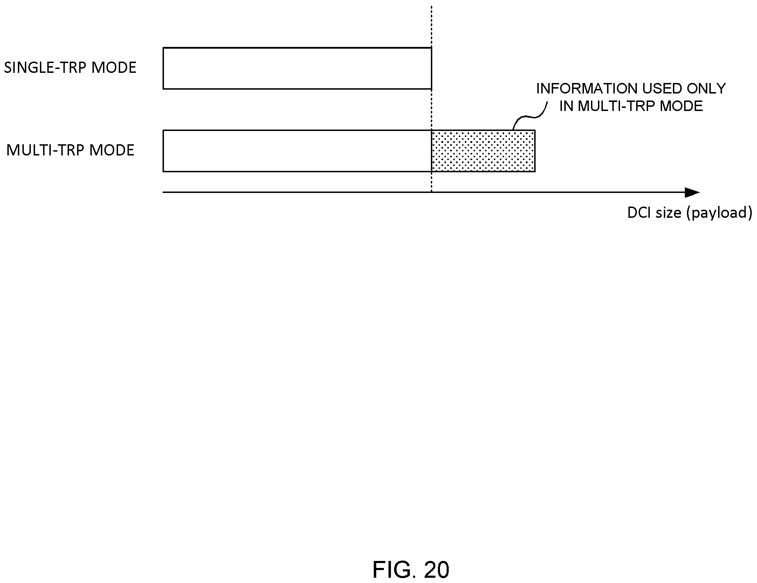

To support multi-TRP operation, a large number of DCI bits is needed in comparison to a case of using a single TRP (see FIG. 20). As shown in FIG. 20, DCI in a case of using multi-TRP may include a field/information used only in a multi-TRP mode.

For example, to support multi-TRP PUSCH repetition, it is conceivable that at least one of a field for switching a single-TRP and multi-TRP, a field for switching SRIs, and a field for switching TPMIs is needed in scheduling DCI (for example, DCI format 0 1/0 2).

In view of this, a method of solving such a problem will be described in the present embodiment below.

For a UE, multi-TRP (mode)/single TRP (mode) may be configured. In this case, the size of DCI may be determined for the multi-TRP mode.

For example, when the multi-TRP (mode)/single TRP (mode) are configured for the UE, the size of DCI in the single-TRP mode may be determined based on the size of DCI in the multi-TRP mode.

For example, when the multi-TRP (mode)/single TRP (mode) are configured for the UE, the size of DCI in the single-TRP mode may be the same as the size of DCI in the multi-TRP mode.

In this case, no common TCI state may be applied to each specific channel (for example, multi-TRP PUSCH repetition). For example, a spatial relation defined in Rel. 15/16 may be applied to the channel.

Application of a common TCI state (and transmission/reception (scheme) of each channel using multi-TRP (PDSCH/PDCCH/PUSCH/PUCCH)) may be configured for a UE. In this case, when DCI indicates the single-TRP mode, the UE may ignore a specific field included in DCI (need not use the specific field).

### <<Switching of Single/Multi-TRP (Modes)>>

In Rel. 18 or later versions, dynamic switching between a single TRP (mode) and multi-TRP (mode) may be supported.

The switching may be performed by DCI. The DCI field may be included in specific DCI. For example, the specific DCI may be DCI for scheduling a PDSCH/PUSCH (for example, DCI format 0_0/0_1/0_2/1_0/1_1/1_2) or may be beam indication DCI.

The switching may be performed by using a TCI field, for example. The UE may determine the single TRP (mode)/multi-TRP (mode), based on the number of TCI states corresponding to one TCI codepoint.

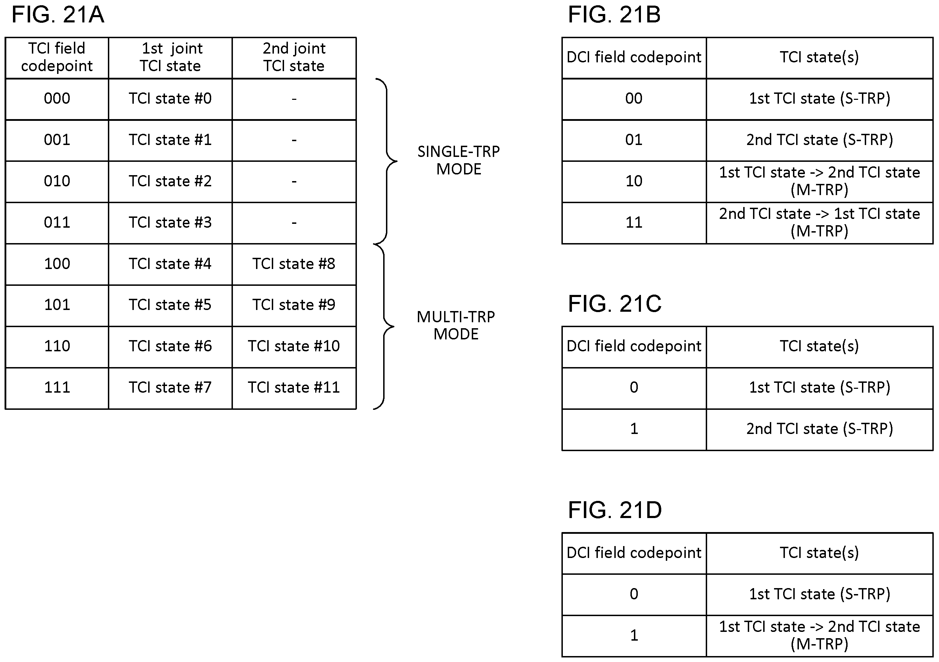

FIG. 21A is a diagram to show an example of switching between a single TRP and multi-TRP according to a second embodiment. A correspondence relationship between each codepoint of a TCI field and one or a plurality of (two) TCI states as those shown in FIG. 21A may be defined/configured.

The correspondence relationship may be defined in a specification in advance or may be configured for a UE by using higher layer signaling (RRC/MAC CE).

When an indicated codepoint of a TCI field corresponds to one TCI state (in other words, in a case of any of codepoints "000" to "011"), the UE determines to be in the single-TRP mode. When an indicated codepoint of a TCI field corresponds to two TCI states (in other words, in a case of any of codepoints "100" to "111"), the UE determines to be in the multi-TRP mode.

For each channel/signal, a DCI field indicating at least one of the single TRP (mode) or multi-TRP (mode) and an order of indicated TCI states may be defined. In the present disclosure, the DCI field may be referred to as a new DCI field.

Note that, when an indicated codepoint of a TCI field corresponds to two identical TCI states, the UE may determine to be in the single-TRP mode. When an indicated codepoint of a TCI state corresponds to two different TCI states, the UE may determine to be in the multi-TRP mode.

FIG. 21B to FIG. 21D are diagrams to show other examples of the switching between a single TRP and multi-TRP according to the second embodiment. A correspondence relationship between each codepoint of a DCI field and one or a plurality of (two) TCI states as those shown in FIG. 21B to FIG. 21D may be defined/configured.

The correspondence relationship may be defined in a specification in advance or may be configured for a UE by using higher layer signaling (RRC/MAC CE).

In the example shown in FIG. 21B, a correspondence relationship between each codepoint of a DCI field and an indication of a TCI state(s) is shown.

In the example shown in FIG. 21B, when a codepoint of the DCI field indicates "00," this indicates that a channel/signal related to the DCI is single-TRP transmission and also a first TCI state is to be applied. When a codepoint of the DCI field indicates "01," this indicates that a channel/signal related to the DCI is single-TRP transmission and also a second TCI state is to be applied.

When a codepoint of the DCI field indicates "10," this indicates that a channel/signal related to the DCI is multi-TRP transmission and also TCI states are to be applied in the order of the first TCI state and the second TCI state to the channels/signals in ascending order of indices of the channels/signals. When a codepoint of the DCI field indicates "11," this indicates that a channel/signal related to the DCI is multi-TRP transmission and also the TCI states are to be applied in the order of the second TCI state and the first TCI state to the channels/signals in ascending order of the indices of the channels/signals.

In the examples shown in FIG. 21C and FIG. 21D, correspondence relationships between codepoints of the DCI field and indications of a TCI state for a single TRP are shown. In the example shown in FIG. 21C, a correspondence relationship between codepoints of the DCI field and indications related to a TCI state(s) for a single TRP and multi-TRP is shown.

In the example shown in FIG. 21C, when a codepoint of the DCI field indicates "0," this indicates that a channel/signal related to the DCI is single-TRP transmission and also a first TCI state is to be applied. When a codepoint of the DCI field indicates "1," this indicates that a channel/signal related to the DCI is single-TRP transmission and also a second TCI state is to be applied.

In the example shown in FIG. 21D, when a codepoint of the DCI field indicates "0," this indicates that a channel/signal related to the DCI is single-TRP transmission and also a first TCI state is to be applied. When a codepoint of the DCI field indicates "1," this indicates that a channel/signal related to the DCI is multi-TRP transmission and also the first TCI state and the second TCI state are to be applied in ascending order of indices of channels/signals.

Note that, in FIG. 21A to FIG. 21D above, "first" and "second" may be interchangeably interpreted. The number of bits of the DCI field and the correspondences of DCI codepoints and indications related to a TCI state(s) above are merely examples, and these are not restrictive.

«Switching of DCI Sizes»

In the following, switching/update of DCI sizes (payloads) with dynamic switching of the single-TRP mode/multi-TRP mode will be described.

A UE may be indicated with the single-TRP mode/multi-TRP mode. The indication may be performed by using DCI/MAC CE.

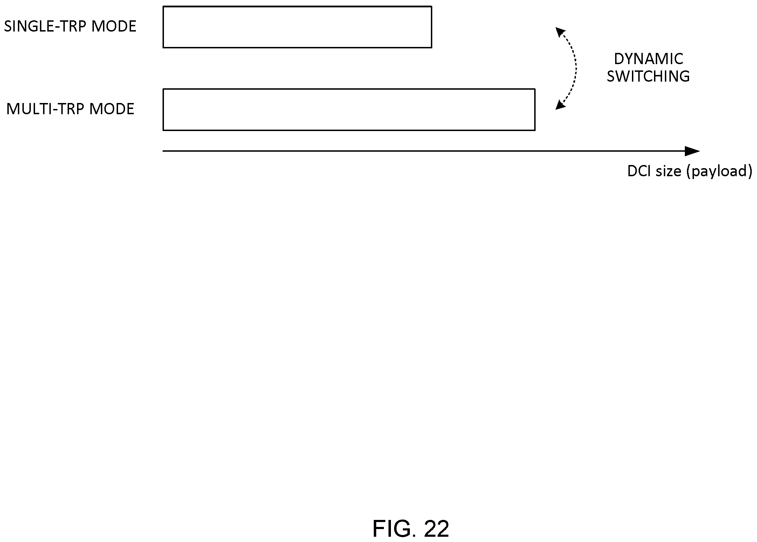

When the indicated mode is a mode different from the mode in which the UE is operating, the DCI size of DL/UL DCI may be changed/switched/updated (see FIG. 22).

The DL DCI may be DCI format 1_1/1_2, for example. The UL DCI may be DCI format 0_1/0_2, for example.

When the single-TRP mode is indicated for the UE, the DCI size of the DL/UL DCI may be determined for the single-TRP mode.

When the multi-TRP mode is indicated for the UE, the DCI size of DL/UL DCI may be determined for the multi-TRP mode.

The DCI size for the single-TRP mode may be smaller than the DCI size for the multi-TRP mode. The UE may assume/expect that the DCI size for the single-TRP mode is smaller than the DCI size for the multi-TRP mode.

For example, a TCI field included in the DCI for the single-TRP mode may be of X bits (for example, X = 3). For example, a TCI field included in the DCI for the multi-TRP mode may be of N × X bits (for example, X = 3). This N may denote the number of TRPs (for example, N = 2).

Note that the present embodiment may be applied (only) to a case where dynamic switching of DCI sizes between the single-TRP mode and the multi-TRP mode is configured for the UE.

<<Blind Detection of DCI Format>>

In blind detection of a DCI format, a UE and a network (for example, a base station) need have common understanding about DCI sizes.

Due to the switching of DCI sizes described above, a difference (error) in understanding related to DCI sizes may occur between the UE and the network.

In the following, a time line related to switching of the single/multi-TRP mode (and switching of DCI sizes) will be described.

Similarly to a BAT defined in Rel. 17 as that described above, timing related to switching of the single/multi-TRP mode (and switching of DCI sizes) may be defined in a specification.

The timing related to the switching of the single/multi-TRP mode (and switching of DCI sizes) may be in the same time line as that of the BAT. Alternatively, the timing related to the switching of the single/multi-TRP mode (and switching of DCI sizes) may be in a time line defined newly (different from that of the BAT).

Note that, since a difference in understanding between the UE and the network related to an "indicated TCI state(s)" is a serious problem, a BAT after HARQ-ACK transmission is defined to reduce the probability of error occurrence (for example, 0.1 percents or lower). By also defining about the timing related to switching of the single/multi-TRP mode (and switching of DCI sizes), similar effects can be obtained.

The timing of application (initiation) of a mode indicated by DCI (first timing) and timing of application (initiation) of a mode indicated by a MAC CE (second timing) may be the same. For example, the first timing and the second timing may be values defined in a specification in advance, may be values configured by higher layer signaling (RRC), or may be determined based on reported UE capability information.

The timing of application of a mode indicated by DCI and timing of application of a mode indicated by a MAC CE may be defined separately. For example, at least one of the first timing and the second timing may be a value defined in a specification in advance, may be a value configured by higher layer signaling (RRC), or may be determined based on reported UE capability information. For example, the second timing may be the next slot after the elapse of a specific time (for example, X ms after (for example, X = 3)) from transmission of an HARQ-ACK related to the MAC CE (last symbol of a PUSCH/PUCCH in which the HARQ-ACK is transmitted).

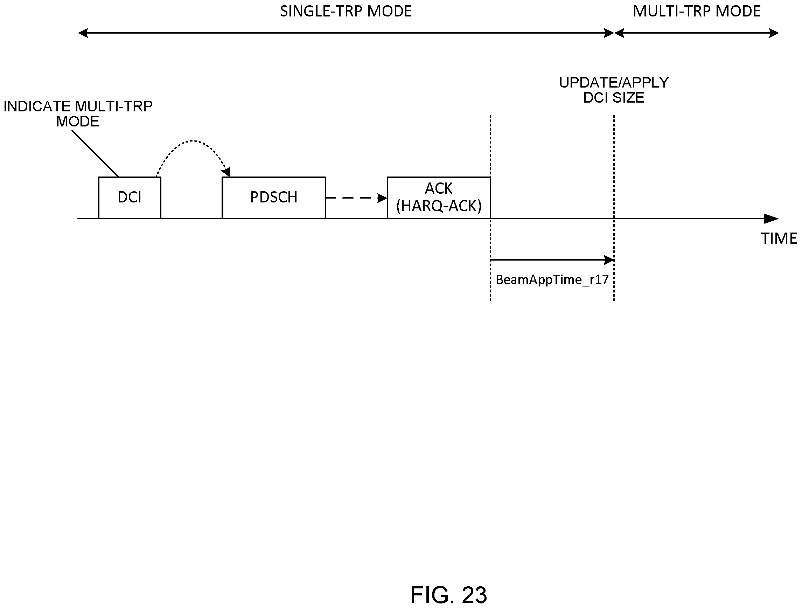

FIG. 23 is a diagram to show an example of switching of single/multi-TRP modes according to the second embodiment. In FIG. 23, a UE receives, while operating in the single-TRP mode, DCI indicating the multi-TRP mode. The UE receives a PDSCH scheduled by the DCI and transmits an HARQ-ACK corresponding to the PDSCH.

In this case, the UE switches to the multi-TRP mode indicated by the DCI, (in the next slot) after the elapse of a specific time (time given by BeamAppTime_r17 in FIG. 23) from the transmission of the HARQ-ACK (last symbol of the PUSCH/PUCCH in which the HARQ-ACK is transmitted).

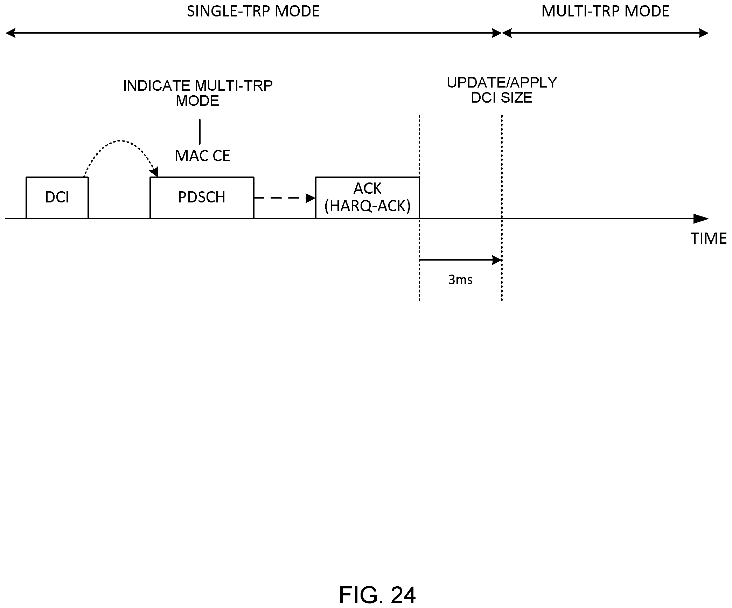

FIG. 24 is a diagram to show another example of the switching of the single/multi-TRP modes according to the second embodiment. In FIG. 24, a UE receives, while operating in the single-TRP mode, a MAC CE indicating the multi-TRP mode in a PDSCH. The UE transmits an HARQ-ACK corresponding to the PDSCH.

In this case, the UE switches to the multi-TRP mode indicated by the MAC CE, (in the next slot) after the elapse of a specific time (3 ms in FIG. 24) from the transmission of the HARQ-ACK (last symbol of the PUSCH/PUCCH in which the HARQ-ACK is transmitted).

In a case where HARQ-ACKs related to a plurality of pieces of DCI (a plurality of DCI) are transmitted in the same transmission occasion (PUSCH/PUCCH/slot), the UE may perform switching of the single/multi-TRP modes according to a mode related to a TRP indicated by specific DCI of the plurality of pieces of DCI (the plurality of DCI).

For example, the specific DCI may be determined based on time/frequency resources of the plurality of pieces of DCI (the plurality of DCI).

For example, the specific DCI may be the earliest/latest DCI in the time domain of the plurality of pieces of DCI (the plurality of DCI) (the PDCCHs/CORESETs/search spaces for transmitting the plurality of respective pieces of DCI (the plurality of respective DCI)). For example, the specific DCI may be DCI of the lowest/highest CC (component carrier) index (or CCE (control channel element) index) in the frequency domain of the plurality of pieces of DCI (the plurality of DCI) (the PDCCHs/CORESETs/search spaces for transmitting the plurality of respective pieces of DCI (the plurality of respective DCI)). The specific DCI may be determined according to a rule for selecting one piece of DCI for determining PUCCH resource indication (for example, a rule based on a CCE index/PRI (PUCCH resource indicator)). At least two of such rules may be applied in combination.

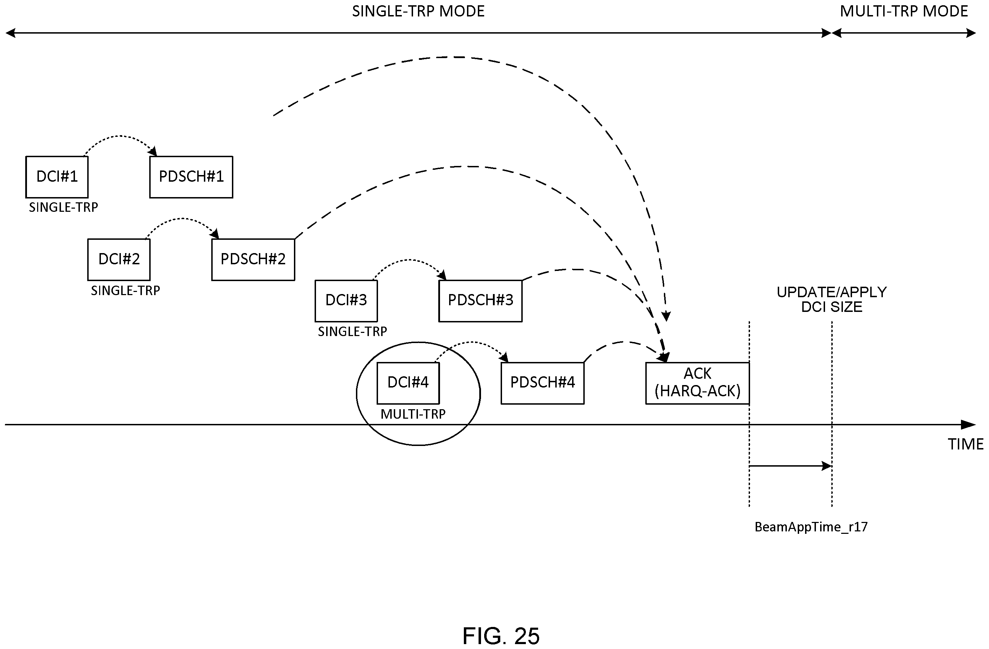

FIG. 25 is a diagram to show another example of the switching of the single/multi-TRP modes according to the second embodiment. Reception of pieces of DCI (Reception of DCI), scheduling/reception of PDSCHs, and transmission of HARQ-ACKs in FIG. 25 are similar to those in FIG. 8 described above.

In FIG. 25, DCI #1 to DCI #3 indicate the single-TRP mode, while DCI #4 indicates the multi-TRP mode. In FIG. 25, according to the multi-TRP mode indicated by DCI #4, which is the latest in the time domain, the UE switches to the multi-TRP mode (in the next slot) after the elapse of a specific time (time given by BeamAppTime_r17 in FIG. 25) from the transmission of the HARQ-ACKs related to DCI #1 to DCI #4 (last symbol of the PUSCH/PUCCH in which the HARQ-ACKs are transmitted).

Note that, although DCI to be selected is determined based on the time domain has been illustrated in the example shown in FIG. 25, a method of selecting DCI is not limited to this.

When either of the single-TRP mode and the multi-TRP mode is indicated/determined based on the number of TCI states, using a BAT for determination of a DCI size (switching of TRP modes) is reasonable. Hence, when either of the single-TRP mode and the multi-TRP mode is indicated/determined based on the number of TCI states (for example, when a field of DCI illustrated in FIG. 21A described above is used), a BAT may be used for determination of a DCI size (switching of TRP modes).

When either of the single-TRP mode and the multi-TRP mode is indicated/determined based on a specific DCI field (for example, a new DCI field defined in FIG. 21B/C/D), operation for the UE to receive DCI for indicating the single-TRP/multi-TRP mode may be defined.

The operation/mechanism may be at least one of options 2-1 and 2-2 below.

### {Option 2-1}

A UE may determine/change/update a DCI size (TRP mode) (in the next slot) after the elapse of a specific time (for example, Y symbols) from transmission of an HARQ-ACK related to DCI including a specific field (last symbol of a PUSCH/PUCCH in which the HARQ-ACK is transmitted).

This Y may be defined in a specification in advance or may be configured for the UE by higher layer signaling (RRC/MAC CE). The higher layer signaling may be an RRC parameter defined newly (in Rel. 18 or later versions) or may be an RRC parameter related to a BAT (for example, BeamAppTime_r17). The Y may be reported as part of UE capability.

Note that, although symbols are used as a unit of Y in the above description, the unit of Y may be a subframe/slot/sub-slot/ms (millisecond), for example.

### {Option 2-2}

A UE may determine/change/update a DCI size (TRP mode) (in the next slot) after the elapse of a specific time (for example, a BAT) from transmission of an HARQ-ACK related to beam indication DCI (last symbol of a PUSCH/PUCCH in which the HARQ-ACK is transmitted).

In other words, DCI used for indication/determination/change of a DCI size (TRP mode) may be beam indication DCI.

The beam indication DCI may be DCI for indicating an "indicated TCI state" irrespective of being with or without DL assignment.

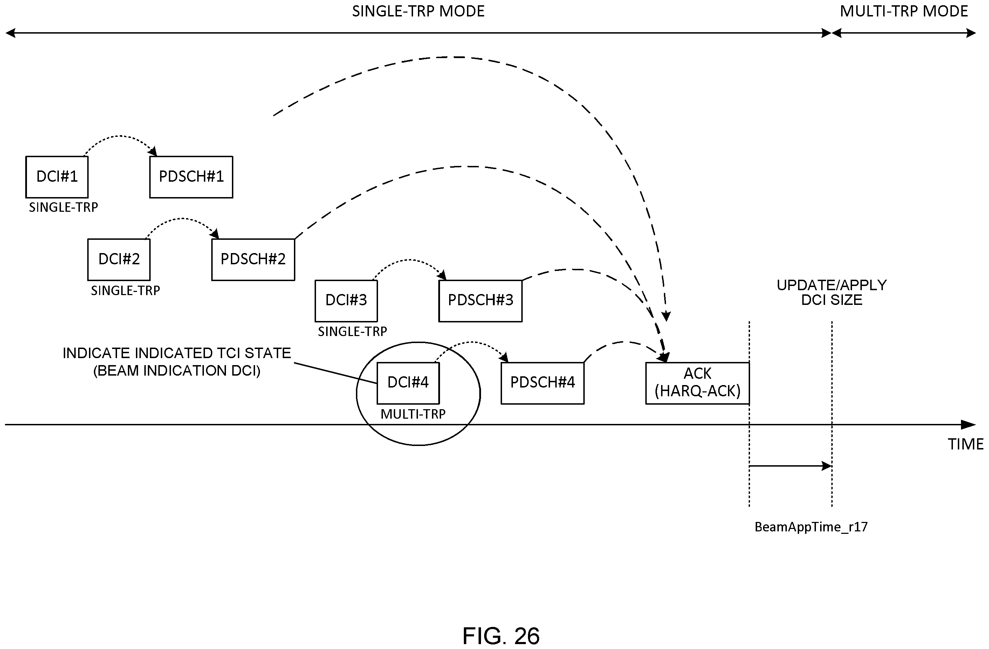

FIG. 26 is a diagram to show another example of the switching of the single/multi-TRP mode according to option 2-2. Reception of pieces of DCI (Reception of DCI), scheduling/reception of PDSCHs, and transmission of HARQ-ACKs in FIG. 26 are similar to those in FIG. 25 described above.

In FIG. 26, DCI #1 to DCI #3 indicate the single-TRP mode, while DCI #4 indicates the multi-TRP mode. In FIG. 26, DCI #4 is beam indication DCI for indicating a TCI state ("indicated TCI state"). In FIG. 26, a new DCI field is included in DCI #4.

In FIG. 26, according to the multi-TRP mode indicated by DCI #4, which is beam indication DCI, the UE switches to the multi-TRP mode (in the next slot) after the elapse of a specific time (time given by BeamAppTime_r17 in FIG. 26) from the transmission of the HARQ-ACKs related to DCI #1 to DCI #4 (last symbol of the PUSCH/PUCCH in which the HARQ-ACKs are transmitted).

According to the second embodiment above, the size of DCI can be appropriately determined/controlled in a case using a single TRP and a case using multi-TRP.

### <Variations>

Each embodiment/option/choice of the present disclosure may be supported in intra-cell/inter-cell beam indication.

In each embodiment/option/choice of the present disclosure, a TRP-specific (additional) Transmitted Precoding Matrix Indicator (TPMI) field/SRI field for PUSCH using Rel-17 multi-TRP may be used.

### <Supplements>

At least one of the embodiments above may be applied only to a UE that has reported a specific UE capability or that supports the specific UE capability.

The specific UE capability may indicate at least one of the following:
- supporting of specific processing/operation/control/information about at least one of the embodiments above
- supporting of (dynamic) beam indication of a scheduled/triggered channel/signal (described in the first embodiment, for example)
- supporting of (dynamic) switching of DCI sizes between the single-TRP mode and the multi-TRP mode
- supporting of a plurality of sets of TCI states (described in the variations of the first embodiment, for example)

The supporting of (dynamic) switching of DCI sizes between the single-TRP mode and the multi-TRP mode may be (independently) reported for each UL DCI, (independently) reported for each DL DCI, or reported all together for UL DCI and all together for DL DCI.

The supporting of (dynamic) switching of DCI sizes between the single-TRP mode and the multi-TRP mode may be (independently) reported for each joint TCI state, (independently) reported for each separate TCI state, or reported all together for joint TCI states and all together for separate TCI states.

The supporting of a plurality of sets of TCI states may be reported by the number of the sets.

The specific UE capability may be a capability applied over all the frequencies (in common irrespective of frequency), a capability for each frequency (for example, cell, band, BWP), a capability for each frequency range (for example, Frequency Range 1 (FR1), FR2, FR3, FR4, FR5, FR2-1, and FR2-2), or a capability for each subcarrier spacing (SCS).

The specific UE capability may be a capability applied for all duplex schemes (in common irrespective of duplex scheme) or a capability for each duplex scheme (for example, time division duplex (TDD), frequency division duplex (FDD)).

At least one of the embodiments above may be applied to a case where the UE is configured with specific information related to the embodiment above by higher layer signaling. For example, the specific information may be information indicating enabling of a common TCI state, any RRC parameter for a specific release (for example, Rel. 18), or the like.

When the UE does not support at least one of the specific UE capabilities above or is not configured with the specific information, operation of Rel. 15/16/17 may be applied, for example.

### (Supplementary Notes A)

Regarding one embodiment of the present disclosure, the following supplementary notes of the invention will be given.

### {Supplementary Note 1}

A terminal including: a receiving section that receives first downlink control information (DCI) for scheduling a signal corresponding to a transmission occasion of Hybrid Automatic Repeat reQuest ACKnowledgement (HARQ-ACK) and second DCI for beam indication corresponding to the transmission occasion; and a control section that determines a first transmission configuration indication (TCI) state to apply to the signal, based on a first TCI field included in the first DCI, and determines a second TCI state application of which is to be initiated after elapse of a specific period from a last symbol of the transmission occasion, based on a second TCI field included in the second DCI, wherein each of the first TCI state and the second TCI state is a TCI state to be applied to both a downlink (DL) signal and an uplink (UL) signal, or a TCI state to be applied to a DL signal and a TCI state to be applied to a UL signal.

### {Supplementary Note 2}

The terminal according to supplementary note 1, wherein the control section applies any one TCI state of a plurality of TCI states for a plurality of signals application of which has already been initiated, to the channel as the first TCI state, based on the first TCI field.

### {Supplementary Note 3}

The terminal according to supplementary note 1 or 2, wherein the control section applies any one TCI state of a plurality of TCI states configured by using higher layer signaling, to the channel as the first TCI state, based on the first TCI field.

### {Supplementary Note 4}

The terminal according to any one of supplementary notes 1 to **3,** wherein the receiving section further receives third DCI for scheduling a different signal from the signal, after elapse of the specific period, the third DCI including a field related to indication of a set of TCI states, and the control section further determines a third TCI state to apply to the different signal, based on the second DCI and the third DCI.

### (Supplementary Notes B)

Regarding one embodiment of the present disclosure, the following supplementary notes of the invention will be given.

### {Supplementary Note 1}

A terminal comprising: a receiving section that receives indication information for indicating either of transmission/reception using a single transmission/reception point (TRP) and transmission/reception using multi-TRP; and a control section that determines at least one of first switching related to the transmission/reception using the single TRP and the transmission/reception using the multi-TRP and second switching related to size of a downlink control information (DCI), based on the indication information, wherein a transmission configuration indication (TCI) state indicated by using the indication information is a TCI state to be applied to both a downlink (DL) signal and an uplink (UL) signal, or a TCI state to be applied to a DL signal and a TCI state to be applied to a UL signal.

### {Supplementary Note 2}

The terminal according to supplementary note 1, wherein the control section determines at least one of the first switching and the second switching, based on the number of TCI states corresponding to a codepoint of a TCI field included in the indication information.

### {Supplementary Note 3}

The terminal according to supplementary note 1 or 2, wherein the control section determines at least one of the first switching and the second switching, based on a field indicating at least one of information indicating either of the transmission/reception using the single TRP and transmission/reception using the multi-TRP and information related to application of a TCI state included in the indication information.

### {Supplementary Note 4}

The terminal according to any one of supplementary notes 1 to 3, wherein the control section performs at least one of the first switching and the second switching at timing of initiating application of the TCI state indicated by using the indication information.

### (Radio Communication System)

Hereinafter, a structure of a radio communication system according to one embodiment of the present disclosure will be described. In this radio communication system, communication is performed by using any one or a combination of the radio communication methods according to the embodiments of the present disclosure.

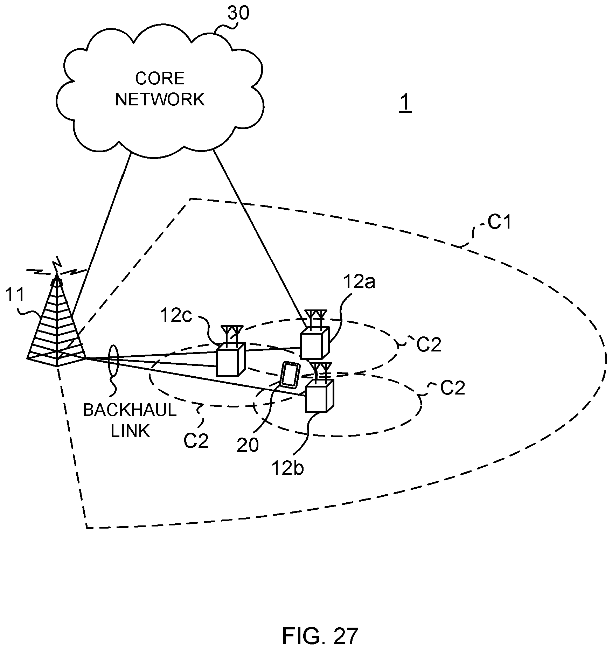

FIG. 27 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a reference signal for measurement (Sounding Reference Signal (SRS)), a demodulation reference signal (DMRS), and so on may be communicated as an uplink reference signal (UL-RS). Note that DMRS may be referred to as a "user terminal specific reference signal (UE-specific Reference Signal)."

### (Base Station)

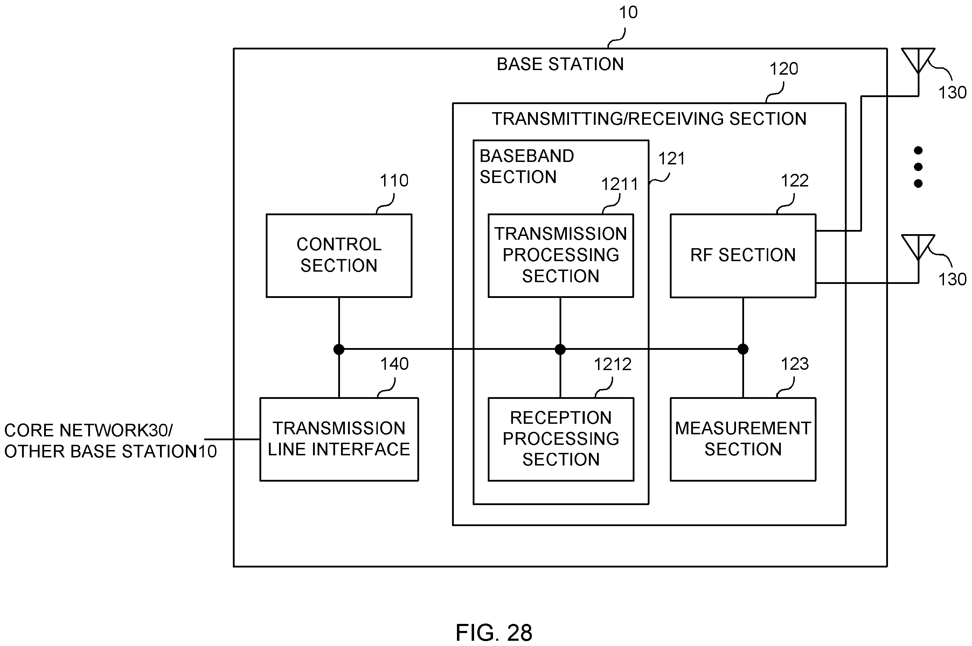

FIG. 28 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit first downlink control information (DCI) for scheduling a signal corresponding to a transmission occasion of a Hybrid Automatic Repeat reQuest ACKnowledgement (HARQ-ACK) and second DCI for beam indication corresponding to the transmission occasion. The control section 110 may indicate a first transmission configuration indication (TCI) state to apply to the signal, by using a first TCI field included in the first DCI, and indicates a second TCI state application of which is to be initiated after elapse of a specific period from a last symbol of the transmission occasion, by using a second TCI field included in the second DCI. Each of the first TCI state and the second TCI state may be a TCI state to be applied to both a downlink (DL) signal and an uplink (UL) signal, or a TCI state to be applied to a DL signal and a TCI state to be applied to a UL signal (first embodiment).

The transmitting/receiving section 120 may transmit indication information for indicating either of transmission/reception using a single transmission/reception point (TRP) and transmission/reception using multi-TRP. The control section 110 may indicate at least one of first switching related to the transmission/reception using the single TRP and the transmission/reception using the multi-TRP and second switching related to size of a downlink control information (DCI), by using the indication information. A transmission configuration indication (TCI) state indicated by using the indication information may be a TCI state to be applied to both a downlink (DL) signal and an uplink (UL) signal, or a TCI state to be applied to a DL signal and a TCI state to be applied to a UL signal (second embodiment).

### (User Terminal)

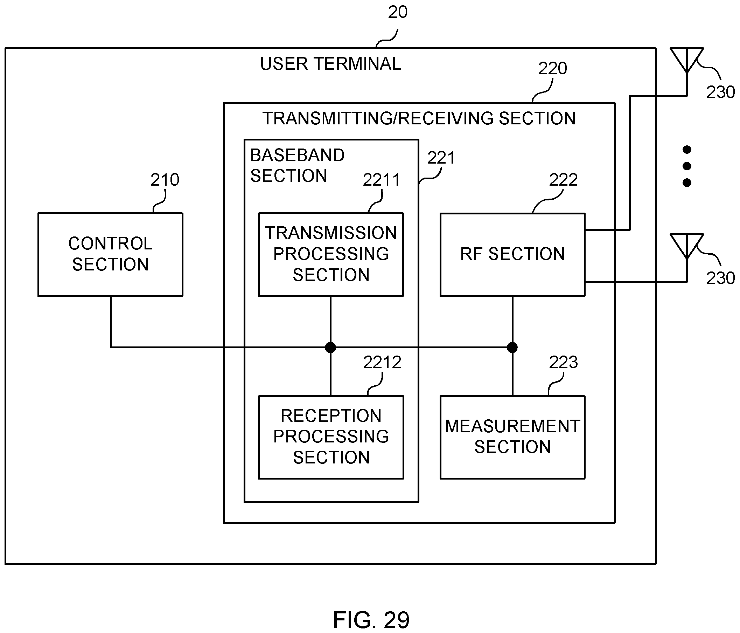

FIG. 29 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive first downlink control information (DCI) for scheduling a signal corresponding to a transmission occasion of a Hybrid Automatic Repeat reQuest ACKnowledgement (HARQ-ACK) and second DCI for beam indication corresponding to the transmission occasion. The control section 210 may determine a first transmission configuration indication (TCI) state to apply to the signal, based on using a first TCI field included in the first DCI, and determine a second TCI state application of which is to be initiated after elapse of a specific period from a last symbol of the transmission occasion, based on a second TCI field included in the second DCI. Each of the first TCI state and the second TCI state may be a TCI state to be applied to both a downlink (DL) signal and an uplink (UL) signal, or a TCI state to be applied to a DL signal and a TCI state to be applied to a UL signal (first embodiment).

The control section 210 may apply any one TCI state of a plurality of TCI states for a plurality of signals application of which has already been initiated, to the channel as the first TCI state, based on the first TCI field (first embodiment).

The control section 210 may apply any one TCI state of a plurality of TCI states configured by using higher layer signaling, to the channel as the first TCI state, based on the first TCI field (first embodiment).

The transmitting/receiving section 220 may further receive third DCI for scheduling a signal different from the signal after the elapse of the specific period. The third DCI may include a field related to indication of a set of TCI states. The control section 210 may further determine a third TCI state to apply to the different signal, based on the second DCI and the third DCI (first embodiment).

The transmitting/receiving section 220 may receive indication information for indicating either of transmission/reception using a single transmission/reception point (TRP) and transmission/reception using multi-TRP. The control section 210 may determine at least one of first switching related to the transmission/reception using the single TRP and the transmission/reception using the multi-TRP and second switching related to size of a downlink control information (DCI), based on the indication information. A transmission configuration indication (TCI) state indicated by using the indication information may be a TCI state to be applied to both a downlink (DL) signal and an uplink (UL) signal, or a TCI state to be applied to a DL signal and a TCI state to be applied to a UL signal (second embodiment).

The control section 210 may determine at least one of the first switching and the second switching, based on the number of TCI states corresponding to a codepoint of a TCI field included in the indication information (second embodiment).

The control section 210 may determine at least one of the first switching and the second switching, based on a field indicating at least one of information indicating either of the transmission/reception using the single TRP and transmission/reception using the multi-TRP and information related to application of a TCI state included in the indication information (second embodiment).

The control section 210 may perform at least one of the first switching and the second switching at timing of initiating application of the TCI state indicated by using the indication information (second embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (separate apparatus) (for example, via wire, wireless, or the like) and using these plurality of pieces of apparatus (these plurality of apparatus). The functional blocks may be implemented by combining softwares into the apparatus described above or the plurality of apparatuses described above.

Here, functions include determination, judgment, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

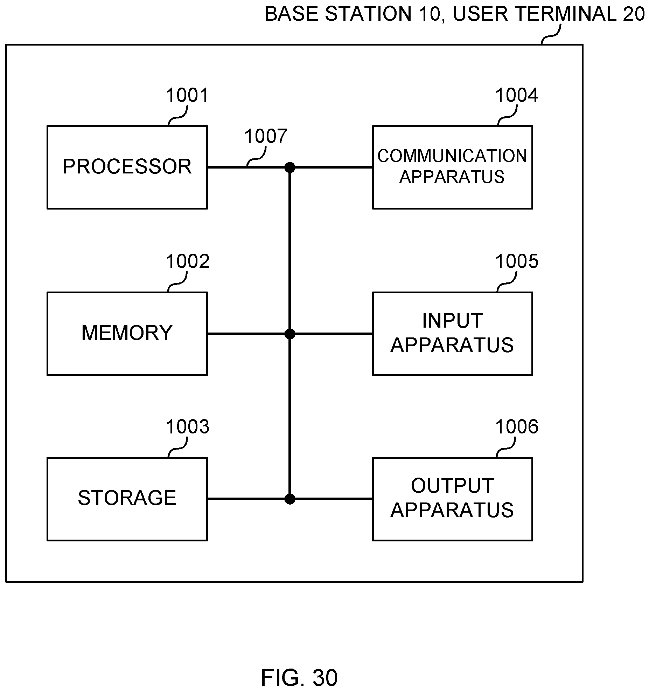

For example, a base station, a user terminal, and so on according to one embodiment of the present disclosure may function as a computer that executes the processes of the radio communication method of the present disclosure. FIG. 30 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus (between apparatus).

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware (these hardware).

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. Since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be notified using, for example, MAC control elements (MAC CEs).

Also, notification of certain information (for example, notification of "X holds") does not necessarily have to be notified explicitly, and can be notified implicitly (by, for example, not notifying this certain information or notifying another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, a base station transmitting information to a terminal may be interchangeably interpreted as the base station indicating control/operation based on the information to the terminal.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

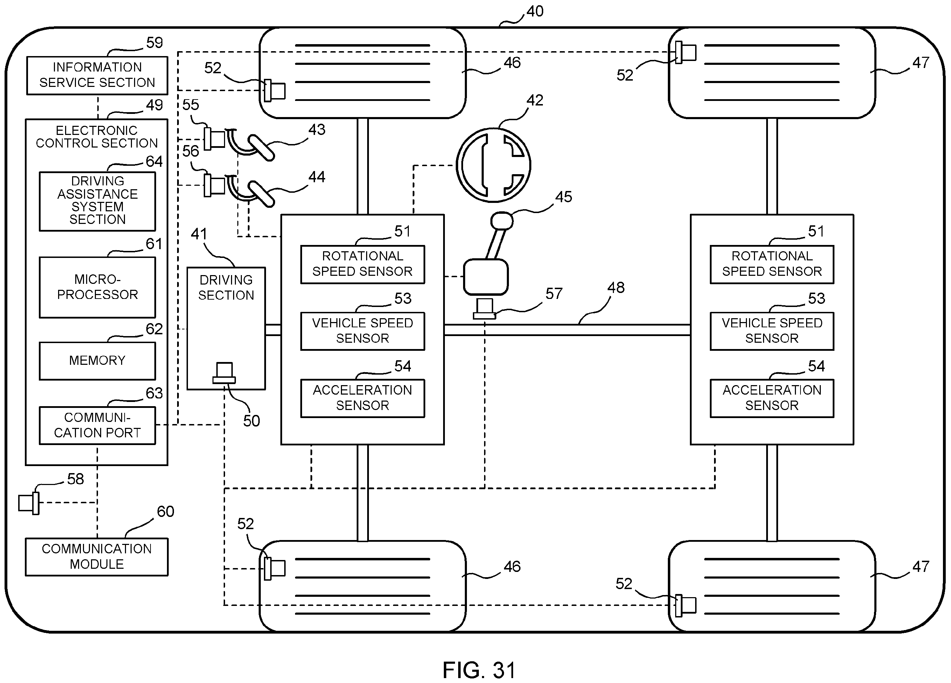

FIG. 31 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information (various information) such as drive information, traffic information, and entertainment information, such as a car navigation system, an audio system, a speaker, a display, a television, and a radio, and one or more ECUs that control these devices. The information service section 59 provides various pieces of information/services (various information/services) (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "determining" as in the present disclosure herein may encompass a wide variety of actions. For example, "determining" may be interpreted to mean making "determinations" about judging, calculating, computing, processing, deriving, investigating, looking up, search and inquiry (for example, searching a table, a database, or some other data structures), ascertaining, and so on.

Furthermore, "determining" may be interpreted to mean making "determinations" about receiving (for example, receiving information), transmitting (for example, transmitting information), input, output, accessing (for example, accessing data in a memory), and so on.

In addition, "determining" as used herein may be interpreted to mean making "determinations" about resolving, selecting, choosing, establishing, comparing, and so on. In other words, "determining" may be interpreted to mean making "determinations" about some action.

In addition, "determining" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

In the present disclosure, "equal to or smaller than," "smaller than," "equal to or larger than," "larger than," "equal to," and the like may be interchangeably interpreted. In the present disclosure, words such as "good," "poor," "large," "small," "high," "low," "early," "late," "wide," "narrow," and the like may be interchangeably interpreted irrespective of positive degree, comparative degree, and superlative degree. In the present disclosure, expressions obtained by adding "i-th" (i is any integer) to words such as "good," "poor," "large," "small," "high," "low," "early," "late," "wide," "narrow," and the like may be interchangeably interpreted irrespective of positive degree, comparative degree, and superlative degree (for example, "highest" may be interpreted as "i-th highest," and vice versa).

In the present disclosure, "of," "for," "regarding," "related to," "associated with," and the like may be interchangeably interpreted.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives first downlink control information (DCI) for scheduling a signal corresponding to a transmission occasion of a Hybrid Automatic Repeat reQuest ACKnowledgement (HARQ-ACK) and second DCI for beam indication corresponding to the transmission occasion; and
a control section that determines a first transmission configuration indication (TCI) state to apply to the signal, based on a first TCI field included in the first DCI, and determines a second TCI state application of which is to be initiated after elapse of a specific period from a last symbol of the transmission occasion, based on a second TCI field included in the second DCI, wherein
each of the first TCI state and the second TCI state is a TCI state to be applied to both a downlink (DL) signal and an uplink (UL) signal, or a TCI state to be applied to a DL signal and a TCI state to be applied to a UL signal.

2. The terminal according to claim 1, wherein
the control section applies any one TCI state of a plurality of TCI states for a plurality of signals application of which has already been initiated, to the channel as the first TCI state, based on the first TCI field.

3. The terminal according to claim 1, wherein
the control section applies any one TCI state of a plurality of TCI states configured by using higher layer signaling, to the channel as the first TCI state, based on the first TCI field.

4. The terminal according to claim 1, wherein
the receiving section further receives third DCI for scheduling a different signal from the signal, after elapse of the specific period, the third DCI including a field related to indication of a set of TCI states, and
the control section further determines a third TCI state to apply to the different signal, based on the second DCI and the third DCI.

5. A radio communication method for a terminal, the radio communication method comprising:
receiving first downlink control information (DCI) for scheduling a signal corresponding to a transmission occasion of a Hybrid Automatic Repeat reQuest ACKnowledgement (HARQ-ACK) and second DCI for beam indication corresponding to the transmission occasion; and
determining a first transmission configuration indication (TCI) state to apply to the signal, based on a first TCI field included in the first DCI, and determining a second TCI state application of which is to be initiated after elapse of a specific period from a last symbol of the transmission occasion, based on a second TCI field included in the second DCI, wherein
each of the first TCI state and the second TCI state is a TCI state to be applied to both a downlink (DL) signal and an uplink (UL) signal, or a TCI state to be applied to a DL signal and a TCI state to be applied to a UL signal.

6. A base station comprising:
a transmitting section that transmits first downlink control information (DCI) for scheduling a signal corresponding to a transmission occasion of a Hybrid Automatic Repeat reQuest ACKnowledgement (HARQ-ACK) and second DCI for beam indication corresponding to the transmission occasion; and
a control section that indicates a first transmission configuration indication (TCI) state to be applied to the signal by using a first TCI field included in the first DCI, and indicates a second TCI state application of which is to be initiated after elapse of a specific period from a last symbol of the transmission occasion, by using a second TCI field included in the second DCI, wherein
each of the first TCI state and the second TCI state is a TCI state to be applied to both a downlink (DL) signal and an uplink (UL) signal, or a TCI state to be applied to a DL signal and a TCI state to be applied to a UL signal.
